# EUROPÄISCHE PATENTANMELDUNG

(11) **EP 4 249 160 A1**
(43) Veröffentlichungstag der Anmeldung: **27.09.2023**
(21) Anmeldenummer: 22164097.2
(22) Anmeldetag: 24.03.2022
(51) Int. Cl.: B23K 26/03, B23K 26/04, B23K 26/08, B23K 26/38, B23K 26/70

(54) **BESTIMMUNG VON KONTURABWEICHUNGEN ZUR STEUERUNG EINER LASERSCHNEIDMASCHINE**

(71) Anmelder: Bystronic Laser AG, 3362 Niederönz (CH)
(72) Erfinder: HAAS, Titus, 4805 Brittnau (CH); LÜDI, Andreas, 3400 Burgdorf (CH)
(74) Vertreter: Schwarz, Claudia

(57) **Zusammenfassung**

In einem Aspekt betrifft die vorliegende Erfindung die Berechnung von Konturabweichungen (ka) zur Steuerung einer Laserschneidmaschine (L) mit Steueranweisungen (sa). Die Konturabweichungen (ka) werden aus einem Verschiebevektor (vv) berechnet, der aus einem Bildvergleich zwischen einem mit einer Kamera (K) erfasste Bild und einem virtuellen Rekonstruktionsbildes (v) ermittelt wird. Das virtuelle Rekonstruktionsbild (v) wird auf Basis einer auf das Werktstück (W) applizierten Referenztextur (RT) und von Steuerwerten (sw) ermittelt.

## Beschreibung

Die vorliegende Erfindung liegt auf dem Gebiet der Laserschneidtechnologie und betrifft insbesondere ein Verfahren zum Steuern einer Laserschneidmaschine und zum Berechnen von Konturabweichungen, eine Recheneinheit sowie ein Computerprogramm.

Die Anforderungen an Laserschneidmaschinen bezüglich Produktivität und Genauigkeit steigen laufend. Ziel ist es, ein Werkstück/Teil möglichst schnell und möglichst genau schneiden zu können. Allerdings sind diesen beiden Zielen Grenzen gesetzt bzw. die Ziele «möglichst schnell» und «möglichst genau» sind gar gegenläufig. Je schneller beispielsweise um eine Ecke geschnitten werden will, umso geometrisch ungenauer wird dieser Eckenschnitt, da aufgrund der Maschinen-, Achsen-, Schneidbrücken- und Schneidkopf-Trägheit und Nachgiebigkeit (Masseträgheit) die tatsächliche Schneidkontur von der Sollkontur aufgrund von Überschwingern abweichen wird. Und dabei kann die exakte Lage des Bearbeitungslaserstrahls typischerweise nicht gemessen werden, da interne Encoder-Masssysteme auf den Antriebsachsen nur indirekt (in der Regel: optisch) messen und die oben beschriebenen Trägheitsmomente und/oder Nachgiebigkeit nicht berücksichtigen können.

Weitere Gründe für die Abweichungen zwischen Ist- und Soll-Schneidkonturen sind Schwingungen des Gantry-Systems bzw. des Roboters, an dem der Bearbeitungskopf befestigt ist, oder Schwingungen des Werkstücks bzw. der Werkstückauflage, die zu Überschwingern beim Schneiden entlang der Schneidkontur führen. Weitere Gründe für Bahnabweichungen können auch hervorgerufen werden durch Reibung, Haftreibung, Umkehrspiel, falsche Kompensationswerte, etc.

Damit nun das zu schneidende Teil innerhalb einer gewünschten Toleranz (Bahnabweichung/Konturfehler) geschnittenen werden kann, werden meist die dynamischen Grenzen einer Maschine (insb. im Bereich von kleinen Radien und Ecken) pauschal eingeschränkt, was zu einer reduzierten Produktivität oder Minderqualität führen kann.

Zudem gibt es unterschiedliche konstruktive Bauformen von Laserschneidanlagen mit unterschiedlich großen Brücken (Gantries), Achsen etc., die jeweils andere Masseträgheiten und/oder Nachgiebigkeiten haben. Eine pauschale Reduktion der Dynamik ist deshalb nicht zielführend. Kleinere Systeme bräuchten beispielsweise eine geringere Reduktion der Dynamik, während sehr große bewegte Massen eine stärkere Reduktion der Dynamik erfordern.

Es ist deshalb wünschenswert, die korrekten Bahnabweichungen für die jeweilige Maschine (mit den jeweiligen Bauteilen, wie Gantry, Achsen, Brücke, Schneidkopf etc.) bestimmen zu können.

Verschiedene Ansätze sind aus dem Stand der Technik bekannt, um die Bahngenauigkeit bestimmen zu können. Diese Ansätze basieren teilweise auf optischen Methoden.

Die DE 10 2018 217 940 A1 schlägt ein Verfahren mit Kamera und Reflexionsmuster vor, um die Konturgenauigkeit zu erhöhen. Dabei wird eine Kamera entlang der Soll-Bahn einer Teilekontur bewegt, welche das Reflexionsmuster der Werkstückoberfläche in überlappenden Teilbereichen ortsaufgelöst erfasst und daraus Abweichungen der gefahrenen Bahn zur Soll-Bahn misst. Insbesondere werden die Positionsinkremente entlang der Teilekontur durch das Optimum einer Ähnlichkeitsfunktion bestimmt, welche auch in DE 10 2005 022 095 A1 beschrieben wird.

Ausgehend von diesem Stand der Technik hat sich die Erfindung zur Aufgabe gestellt, die Konturabweichungen von einer vorgegebenen Sollbahn und damit die Konturtreue bei einer Schneidaufgabe zu bestimmen. Insbesondere sollen die ggf. bestimmten Konturabweichungen zur Korrektur bzw. Kompensation bereits vor dem Schneiden erfolgen, um die Anzahl fehlerhaft geschnittenen Teile zu reduzieren. Insgesamt soll die Qualität des Schneidergebnisses verbessert werden. Zudem soll eine Kalibrierung der jeweiligen Schneidanlage bzw. Schneidmaschine mit ihren konstruktiven Bauteilen (wie z.B. Gantry, Maschinenachsen, Schneidbrücke, Schneidkopf etc.) möglich sein. Mit anderen Worten sollen Konturabweichungen für die jeweilige Schneidanlage bestimmt werden, um die Dynamik an bestimmten Positionen auf der Sollbahn gezielt adaptieren zu können. Damit soll die Qualität und die Produktivität der zu schneidenden Teile verbessert werden.

Diese Aufgabe wird durch die beiliegenden Patentansprüche gelöst, insbesondere durch ein computer-implementiertes Verfahren, eine Recheneinheit und ein Computerprogramm. Gemäß einem ersten Aspekt wird diese Aufgabe gelöst durch ein computer-implementiertes Verfahren zum Berechnen von Konturabweichungen zur Steuerung einer Laserschneidmaschine, die die beim Schneiden von Werkstücken mit einem Bearbeitungslaserstrahl der Laserschneidmaschine entstehen können, mit folgenden Verfahrensschritten:
a) Einlesen eines Schneidplans, der eine Sollbahn für einen Schneidkopf der Laserschneidmaschine vorgibt;
b) Definieren einer Referenztextur oder Einlesen einer Referenztextur aus dem Schneidplan;
c) Applikationsfahrt des Laserschneidkopfes zum Applizieren der Referenztextur zumindest an ausgewählten Positionen entlang der Sollbahn auf dem Werkstück;
d) Ausführen einer Bilderfassungsfahrt des Laserschneidkopfes zum Erfassen von zumindest einem Bild, in dem zumindest ein Teil der applizierten Referenztextur abgebildet ist, mittels einer am Laserschneidkopf angeordneten optischen Erfassungseinrichtung an zumindest einer der ausgewählten Positionen entlang der Sollbahn;
e) Rekonstruieren zumindest eines virtuellen Rekonstruktionsbildes auf Basis von Steuerwerten, die aus der Sollbahn berechnet werden, und auf Basis der definierten Referenztextur;
f) Anwenden eines Bildverarbeitungsmittels zum Vergleich des erfassten zumindest einen Bilds und des rekonstruierten virtuellen Rekonstruktionsbildes zur Bestimmung eines Verschiebevektors zwischen jeweils zugeordneten Bildpunkten;
g) Ausgeben der Konturabweichung, die aus dem bestimmten Verschiebevektor berechnet wird.

Die berechnete und ausgegebene Konturabweichung wird vorzugsweise verwendet, um die Laserschneidmaschine zu kalibrieren. "Kalibrieren" der Laserschneidmaschine basiert somit auf den berechneten Konturabweichungen. Das Kalibrieren kann das Erzeugen eines Kompensationsmodells für die jeweilige Laserschneidmaschine beinhalten. Die berechneten Konturabweichungen werden vorzugsweise mit ihren unterschiedlichen Abhängigkeiten erfasst und gespeichert, also insbesondere in Abhängigkeit von einer Beschleunigung, einem Vorschub, einer Richtungsänderung, einer Lage auf dem Arbeitstisch etc. Das Kalibrieren dient dazu, Konturabweichungen im Produktivschnitt zu vermeiden bzw. zu minimieren. Die ausgegebene Konturabweichung kann insbesondere verwendet werden, um die Dynamik an ausgewählten Positionen auf der Sollbahn gezielt zu reduzieren, nämlich in Abhängigkeit von den bestimmten Konturabweichungen, die durch Masseträgheiten und/oder Nachgiebigkeiten der bewegten Bauteile der Laserschneidanlage verursacht sind. Anstelle der Reduktion der Dynamik, wird erfindungsgemäß der Positionswert des Steuerwertes (X,Y) um die Konturabweichung (einige Mikrometer) verschoben. Das so ermittelte Wertepaar (verschobener Positionswert) wird als Steueranweisung zur Ansteuerung der Achsen verwendet. Die berechneten Steueranweisungen beinhalten Korrekturinstruktionen und werden auf Basis der berechneten Konturabweichung ermittelt.

Die Reduktion der Dynamik an bestimmten Positionen ist eine Maßnahme, um Konturabweichungen zu reduzieren. Alternativ oder kumulativ und bevorzugt sollen die Steuerwerte (X, Y) um den Verschiebevektor verschoben werden. Dies hat den technischen Vorteil, dass den dynamisch induzierten Konturfehlern entgegengewirkt werden kann. Anstelle der Reduktion der Dynamik wird der Positionswert des Steuerwertes (X,Y) um die Konturabweichung (einige Mikrometer) verschoben.

Die hier beschriebene Lösung hat einige Vorteile. Es wird eine Referenztextur als einfache, jedoch exakt bestimmbare Signatur verwendet. Das Verfahren kann vor dem Produktivschneiden ausgeführt werden; es muss kein Test-Schneidvorgang ausgeführt werden (keine Mikrostege). Das Verfahren ist schnell und bietet eine Kalibrierung der Laserschneidmaschine insbesondere vor dem produktiven Schneiden. Die Methode ist exakt und funktioniert ohne Ausschuss. Mit diesem Vorgehen ist es möglich, die Maschine zu kalibrieren ohne, "unnötig" (da nur für die Kalibrierung) Teile schneiden zu müssen. Das Blech muss nur mit der Referenztextur versehen werden; es muss nicht geschnitten werden.

Im Folgenden werden die in dieser Anmeldung verwendeten Begrifflichkeiten näher erläutert.

Die Laserbearbeitungsmaschine kann vorzugsweise eine Laserschneidmaschine und insbesondere eine Laserschneidmaschine in einer Flachbettschneidanlage sein. Die Laserschneidmaschine ist insbesondere zum Schneiden von flächigen Werkstücken ausgebildet, die zu diesem Zweck der Laserschneidmaschine zugeführt werden.

Die Laserschneidmaschine umfasst einen Laserschneidkopf. Der Laserschneidkopf wird von einem elektromechanischen Antriebssystem über dem Werkstück (entlang der Solbahn) bewegt. Die Laserschneidmaschine kann mit einem Portal- oder Gantry-Antrieb mit einer Schneidbrücke ausgebildet sein mit vorzugsweise zwei Vorschubmotoren, die die Schneidbrücke synchron in einer Achse bewegen. Der Laserschneidkopf kann an der Schneidbrücke wiederum beweglich angeordnet sein. Vorzugsweise kann der Laserschneidkopf in 3 Raumachsen gegenüber der Schneidbrücke bewegt werden.

Alternativ kann der Schneidkopf auch an einem mobilen Roboter angeordnet sein. Der mobile Roboter wird ebenfalls über ein elektromechanisches Antriebssystem, vorzugweise mit mindestens 2 Motoren für die 2 Raumachsen (X, Y Achse in der Ebene des Arbeitstisches) bewegt. Der mobile Roboter kann auch mit 6 Freiheitsgraden (6DOF) ausgebildet sein.

Die Laserbearbeitungsmaschine kann als roboter-gesteuertes System oder als Portalsystem ausgebildet sein. Der Laserbearbeitungskopf bzw. insbesondere der Laserschneidkopf kann typischerweise nur direkt an eine Achse angeschlossen sein, z.B. an der Z-Achse.

Das Antriebssystem wird mit Steuerwerten und/oder Steueranweisungen angesteuert wird. Steuerwerte werden aus der Sollbahn berechnet. Steueranweisungen beinhalten Korrekturinstruktionen zur Kompensation der berechneten Konturabweichungen. Steueranweisungen dienen zur Ansteuerung des Antriebssystems und insbesondere der einzelnen Achsen (x_d, y_d).

Werkstücke sind insbesondere flächige Werkstücke, vorzugweise aus Metall. Die Werkstücke werden zur Bearbeitung durch die Laserschneidmaschine auf einem Bearbeitungstisch (z.B. Schneidrost) platziert. Ein Laserschneidkopf wird mittels mechanischer Komponenten und einer Steuerung entlang der Sollbahn bewegt, um Teile aus dem Werkstück zu schneiden.

Die Bahnabweichungen können sich in X-, und Y- Richtung in Bezug auf das Werkstück erstrecken. Die Bahnabweichungen in X- und Y-Richtung stellen Konturabweichungen (von einer Sollkontur) dar, also insbesondere Abweichungen zwischen (intendierter) Sollbahn und (tatsächlich gefahrener) Istbahn. Die Abweichungen resultieren aus Trägheiten der bewegten Massen und/ der Nachgiebigkeit zwischen den Maschinenkomponenten, wie z.B. dem Schneidkopf, den Maschineachsen.

Die Sollbahn kann aus dem Schneidplan ermittelt werden und dient als Vorgabe für die Sollgeometrie. Üblicherweise hat die Sollbahn noch keine Zeitinformation bzw. keinen Zeitbezug.

Eine Steuerung (z.B. CNC) der Laserbearbeitungsmaschine erstellt aus dem Schneidplan und der Sollbahn, Steuerwerte zur Ansteuerung der Antriebsachsen zur Bewegung des Laserschneidkopfes. Die Steuerwerte haben einen Zeitbezug. Die Steuerwerte codieren damit eine Trajektorie (=zeit-abhängiger Pfad). Die Steuerwerte dienen dazu, das Antriebssystem (mit mindestens 2 Achsen, alternativ 3 Achsen: X- , Y- und Z-Achsen) zu steuern. Das Generieren der Steuerwerte ist grundsätzlich bekannt. Die generierten Steuerwerte werden erfindungsgemäß (leicht) adaptiert, um die etwaig entstehenden Konturabweichungen zu kompensieren/reduzieren. Alternativ kann auch eine dynamische Radiuskorrektur-Funktionalität verwendet werden (dabei wird im Steuerungstakt (ca. 1 ms) der Werkzeugradius angepasst und entsprechend der Steuerwert angepasst).

Aus einem Messsystem des Antriebssystems (vorzugsweise mit drei Antriebsachsen) können Encoderwerte für jede der Antriebsachsen bereitgestellt werden. Die Encoderwerte repräsentieren die tatsächlich von den Antriebsachsen zu einem definierten Zeitpunkt angefahrene Position der Motoren der jeweiligen Antriebsachse. Aus den Encoderwerten kann allerdings nicht auf die Position des Laserschneidkopfes und/oder des Tool Center Points (TCP) geschlossen werden, da Massenträgheiten bei Bewegung zu Positionierungsungenauigkeiten führen. Mithilfe der Achs- bzw. Antriebs-Encoderwerte ist der Maschinensteuerung exakt bekannt, an welcher Stelle (Ort A) von der Kamera das Bild A aufgenommen wurde. Damit kann die Recheneinheit oder die Maschinensteuerung ableiten, wie das zu erwartende Bild (virtuelle Rekonstruktionsbild A') an Ort A ausschauen sollte.

Unter anderem verursacht die Massenträgheit des Laserschneidkopfes bei Bewegung Konturfehler. Diese Konturfehler können mit der hier vorgestellten Lösung bestimmt werden. Aus dem bestimmten Konturabweichungen können wiederum Steueranweisungen zur Bewegung des Schneidkopfes berechnet werden, mit denen die Konturabweichungen reduziert oder gar vollständig eliminiert werden. Insbesondere können dabei folgende Berechnungen angewendet werden:
Xd: Steuerwert X-Achse,
Xt: TCP Wert X-Richtung,
Xe: Enocoder Wert X-Achse,
Kax (konturabweichung in X Richtung),
Kax=Xt-Xd,
Kcomp: Faktor um welchen die Konturabweichung kompensiert wird (1: 100%, 0.8:80%). Es kann vorteilhaft sein, nicht die gesamte Differenz zu kompensieren, sondern nur einen Anteil.
Xd*: Neuer Steuerwert bzw. Steueranweisung, welche die Konturabweichung (in X-Richtung) kompensiert:
   Xd*=Xd+Kax, wobei Kax über eine dynamische Konturabweichungsschnittstelle (z.B. ISG/Beckhoff) oder über die dynamische Werkzeugradiuskorrektur- Funktionalität oder durch Anpassen der Dynamik kompensiert werden kann.

Bei den Steueranweisungen handelt es sich somit auch um Steuerwerte, die allerdings Korrekturinstruktionen zur Kompensation der Konturfehler beinhalten. Mit Steuerwert ist der Wert gemeint, welcher dem Motor zugewiesen wird (X_d, Y_d für die Motoren der X- und Y-Achsen). Werden die Konturfehler kompensiert, werden leicht angepasste Steuerwerte (X_d*, Y_d*), nämlich die Steueranweisungen verwendet.

Die Steueranweisungen sind typischerweise positionsspezifisch, da die Konturabweichungen positionsabhängig sind. Der Korrekturinstruktionen können auch positionsspezifisch sein. So kann z.B. an einer ersten Position (z.B. erste Ecke) die Konturabweichung um Faktor x und an einer zweiten Position (z.B. zweiten Ecke) um Faktor y kompensiert werden.

Vorzugsweise sollen die Sollwerte angepasst werden. Es muss nicht zwangsläufig die Dynamik reduziert werden. Falls man mit der Reduktion der Dynamik kompensieren möchte, so wäre ein Faktor von ca. 0.8-0.1 sinnvoll (bei einer maximalen Beschleunigung von 10m/s^2) Die Faktoren hängen jedoch stark vom zugrunde liegenden System ab und der maximal möglichen Dynamik).

Die Steueranweisungen sind typischerweise achs-spezifisch.

Die Steueranweisungen beinhalten die Korrekturinstruktionen, um die bestimmten Bahnabweichungen aufgrund der Masseträgheiten oder Nachgiebigkeiten der bewegten Komponenten zu kompensieren. Die Komponenten einer Flachbettmaschine sind ausgewählt aus der Gruppe, bestehend aus:
- Gantry System (X1 und X2 Achse),
- Y-Achse,
- Z-Achse,
- Schneidkopf,
- Energie und Stromversorgungskabel,
- Signalleitende Kabel (zu Motoren/Sensoren),
- Kabelführung (in welchen die Kabel geführt sind),
- Maschinenbett,
- Schneidrost,
- Verschalungen und
- Werkstück.

Die Massen der jeweiligen Komponenten können sehr unterschiedlich sein. Z.B. wird die Brücke eine deutlich höhere Masse haben als die Komponente mit der der Kopf an der Brücke beweglich gelagert ist. Durch das Messen mittels Kamera am TCP ist es möglich, die Konturabweichung exakt zu bestimmen. Die Ursache der Konturabweichung ist grundsätzlich zweitrangig, aber um die Masseunterschiede bei den Steueranweisungen zu berücksichtigen, kann der Kompensationsfaktor (Kcomp) masse-abhängig berechnet werden.

Die Gesamtmasse des Schneidkopfes und der trägen Komponenten der Schneidkopfbewegungseinheit kann in einem Bereich von 200 bis 500kg liegen; die Masse des Schneidkopfes kann in einem Bereich von 10 bis 20kg liegen.

Die vorliegende Erfindung hat das primäre Ziel, Bahnabweichungen und insbesondere Konturfehler zu detektieren, die nicht aus den Encoderwerten zu entnehmen sind, wie z.B. Schneidkopfüberschwinger in den Ecken. Die Konturabweichungen können im Stand der Technik nicht exakt durch die Encoderwerte berechnet werden, wodurch eine genaue Kompensation unmöglich ist. Diese Kompensation wird jedoch mit der vorliegenden Erfindung möglich.

Die Referenztextur ist in einer ersten Ausführungsform der Erfindung eine Textur, beispielsweise in Form einer Zahlen- und/oder Buchstabenreihe und/oder ein 2-dimensionales Muster. In einer zweiten Ausführungsform der Erfindung ist die Referenztextur die Sollbahn aus dem Schneidplan. In beiden Ausführungsformen wird die Referenztextur auf das Werkstück appliziert.

Das Applizieren kann ein physikalischer Bearbeitungsvorgang unmittelbar auf dem Werkstück sein, wie z.B. ein Gravieren mit dem Laser. Alternativ kann ein anderes optisches oder mechanisches Verfahren zur Anwendung kommen. Alternativ kann ein Muster (z.B. Lochmuster) in das Werkstück (z.B. Blech) geschnitten werden. Es ist auch möglich, eine Referenztextur mit einem Drucker auf das Werkstück aufzubringen (z.B. mittels eines Inkjet Druckers, welcher außerhalb des Schneidkopfs, aber fix verbunden, angeordnet ist).

Die Referenztextur kann z.B. auf der vollständigen Sollbahn oder nur lokal an ausgewählten Positionen appliziert werden. Beispielsweise kann die Referenztextur bei Richtungsumkehr, in Ecken oder bei kleinen Radien appliziert werden. Die Referenztextur kann insbesondere an Positionen appliziert werden, wo dynamisch induzierte Konturfehler zu erwarten sind.

Das Rekonstruieren zumindest eines virtuellen Rekonstruktionsbildes in Schritt e) erfolgt auf Basis von Steuerwerten der definierten Referenztextur.

Grundsätzlich werden mit der hier vorgeschlagenen Lösung vor dem eigentlichen Produktivschneidvorgang zwei Fahrten mit dem Laserschneidkopf ausgeführt, in denen der Laser nicht für das Schneiden - allenfalls für ein Applizieren der Referenztextur, beispielsweise mittels eines Graviervorganges - aktiviert ist. Die beiden "Vorab-Fahrten" dienen unterschiedlichen Zwecken. In der ersten Fahrt handelt es sich um eine Applikationsfahrt, die zum Applizieren der Referenztextur dient. Bei der zweiten Fahrt handelt es sich um eine Bilderfassungsfahrt, die zur Bilderfassung mittels einer optischen Erfassungseinrichtung dient. Die optische Erfassungseinrichtung ist am Laserschneidkopf, vorzugsweise koaxial, angeordnet. Bei Bewegung des Laserschneidkopfes kann sie Bilder vom Werkstück entlang der mit dem Laserschneidkopf abgefahrenen Bahn aufnehmen. Alternativ kann die optische Erfassungseinrichtung außermittig am Laserschneidkopf mit entsprechenden optischen Umlenkungselementen angeordnet sein. Bei der optischen Forschungseinrichtung handelt es sich beispielsweise um eine Kamera (zum Beispiel CCD Kamera) oder um alternative Vorrichtungen zur Erfassung von Bildern.

Es sei bemerkt, dass die Bilderfassung in einer ersten Ausführungsform (Methode 1) auf der Ist-Bahn, jedoch in einer zweiten Ausführungsform (Methode 2) auf der Soll-Bahn erfolgt.

Die Applikationsfahrt erfolgt an ausgewählten Positionen entlang und/oder direkt auf der Sollbahn. In einem Ausführungsbeispiel kann die Referenztextur auf der vollständigen Sollbahn einer zu schneidenden Kontur graviert werden. In einem anderen Ausführungsbeispiel kann die Referenztextur nicht auf der vollständigen Sollbahn graviert werden, sondern nur an ausgewählten Positionen der Sollbahn, beispielsweise an engen Radien, Ecken und/und/oder bei Positionsumkehr des Laserschneidkopfes und somit dort, wo sich die Massenträgheiten und/oder die Nachgiebigkeit der Komponenten des Schneidsystems verstärkt auswirken.

Die Bilderfassungsfahrt wird insbesondere dort ausgeführt, wo in der vorhergehenden Applikationsfahrt die Referenztextur appliziert worden ist. In einem Ausführungsbeispiel kann die Bilderfassungsfahrt genau dort ausgeführt werden, wo auch die Applikationsfahrt ausgeführt worden ist. In einem anderen Ausführungsbeispiel kann die Bilderfassungsfahrt nur in bestimmten Bereichen der Applikationsfahrt ausgeführt werden. Dies macht insbesondere dann Sinn, wenn die Referenztextur in der Applikationsfahrt auf der vollständigen Sollbahn appliziert worden ist und die Bilderfassung z.B. nur an ausgewählten Positionen, z.B. nur in den Ecken, engen Radien und/oder bei Positionsumkehr ausgeführt werden soll, um unnötige Bildaufnahmen zu vermeiden. Die Bilderfassungsfahrt muss somit nicht zwingend mit der Applikationsfahrt übereinstimmen.

Zudem kann die Bilderfassung während der Bilderfassungsfahrt konfiguriert werden. So kann in einer Voreinstellung eingestellt sein, dass die Bilderfassung während der Bilderfassungsfahrt nach einem vorkonfigurierbaren Muster (zum Beispiel festes Zeitintervall: alle 3 ms wird eine Bildaufnahme ausgeführt) erfolgt. Alternativ oder kumulativ kann konfiguriert sein, dass die Bilderfassung an bestimmten Positionen des Schneidplans erfolgt, also insbesondere an neuralgischen Positionen (siehe oben: bei engen Radien, in Ecken etc.). Die Bilderfassung muss somit nicht zwangsläufig kontinuierlich während der Bilderfassungsfahrt ausgeführt werden, sondern kann intermittierend und insbesondere sporadisch an neuralgischen Positionen getriggert werden.

Die Konfiguration der Positionen kann auf einer (z.B. grafischen) Benutzeroberfläche (HMI) erfolgen.

Das Bildverarbeitungsmittel kann einen Algorithmus oder eine andere Auswertungsanweisung (z.B. eine Heuristik, ein digitales Bildinformationsextraktionsverfahren) enthalten.

Der Verschiebevektor liegt zumindest in der Ebene des Werkstücks, also zumindest mit X- und Y-Richtungswerten in einem Koordinatensystem.

Die Referenztextur wird vorzugsweise direkt auf oder entlang der Soll-Bahn (z. B. parallel dazu) appliziert oder eingeblendet, die der Laserschneidkopf abfahren soll. Die Referenztextur muss so appliziert, aufgebracht oder eingeblendet werden, dass sie vom Sichtfeld oder Field of View (FOV) der Kamera detektierbar ist. Vorzugsweise wird die Referenztextur so über der Soll-Bahn aufgebracht, dass ein Überschneidungsbereich entsteht. Die Referenztextur ist üblicherweise größer als die Soll-Bahn, die als Linie oder Kurve vorgegeben ist. Die Referenztextur kann eine Größe, insbesondere Höhe, aufweisen, die in einem Bereich zwischen 10µm und 10mm liegt, wobei die Größe bzw. Höhe hier senkrecht zu einer Abfahr-Richtung des Schneidkopfes definiert ist. Die seitliche, also in Abfahr-Richtung sich erstreckende Länge oder Breite ist variabel und abhängig vom Schneidplan bzw. der Kontur. Die Referenztextur dient zur örtlichen Referenzierung zwischen dem virtuellen Rekonstruktionsbild und einem real erfassten Bild an derselben Position. Die Referenztextur kann vorzugsweise als Zahlenreihe, insbesondere als fortlaufende Zahlenreihe und/oder als Buchstabenfolge eines Alphabets, insbesondere fortlaufende Buchstabenfolge oder als nichtperiodisches, nicht-lineares und nicht repetitives Muster ausgebildet sein. Die Referenztextur kann z.B. ein Blech oder ein flächiges Objekt sein, dessen Außenkontur der Soll-Bahn entspricht. Die Referenztextur kann ein Muster sein, das vorher auf ein Blech aufgebracht, z.B. graviert, wurde und/oder eine natürliche Textur/Oberflächenmikrostruktur entlang der Soll-Bahn (bei langsam Abfahren ermittelt).

Die Kamera kann vorzugsweise koaxial oder zentrisch zur Laserstrahloptik angeordnet sein und zur Detektion der Prozesszone dienen. Es können auch mehrere Kameras ausgebildet sein. Die Kamera kann mit einer Beleuchtungsquelle gekoppelt sein. Die Kamera kann auch mit einem Offset und nicht koaxial befestigt sein; dann muss der Offset bekannt sein und wird bei der Rekonstruktion der mit dem Schneidkopf tatsächlich abgefahrenen Bahn berücksichtigt.

Die Soll-Bahn entspricht der zu schneidenden Kontur. Die Soll-Bahn kann aus einem Schneidplan eingelesen werden. Die Soll-Bahn entspricht der gewünschten, im Schneidplan definierten Geometrie.

Gemäß einer bevorzugten Ausführungsform der Erfindung kann die Referenztextur in einer Konfigurationsphase aus einem vorgegebenen Musterschatz, der vorzugsweise in einem Speicher gespeichert ist, ausgewählt und/oder z.B. über eine Mensch-Maschine-Schnittstelle, Human-Machine-Interface, HMI, eingelesen werden. Vorzugsweise wird die Referenztextur automatisch bestimmt und auf dem HMI als Vorschlag präsentiert. Der Anwender erhält daraufhin die Möglichkeit, den Vorschlag zu akzeptieren oder noch zu modifizieren. Kumulativ oder alternativ können auf dem HMI Schaltflächen bereitgestellt werden, über die der Anwender die Referenztextur sozusagen selbst konfigurieren kann. Dies hat den Vorteil, dass das Konturtreuebestimmungsverfahren auch dann ausführbar ist, wenn z.B. die Datenverbindung zum Speicher mit den gespeicherten Referenztexturen vorübergehend unterbrochen ist.

In einer bevorzugten Ausführungsform der Erfindung ist es vorgesehen, dass die Referenztextur konfigurierbar ist und insbesondere in Abhängigkeit von der verwendeten Düse (Düsenbreite), der mechanischen Aktoren, des Schneidplans bzw. der darin definierten Kontur und/oder von Schneidparametern (z.B. Fokuslage) konfigurierbar ist.

In einer weiteren vorteilhaften Ausführungsform der Erfindung können Befehle bereitgestellt werden, die das Aktivieren oder Einschalten einer Beleuchtungsquelle auslösen, so dass z.B. synchron zu dem Erfassen der Einzelbilder eine Beleuchtungsquelle, insbesondere ein Beleuchtungslaser, eingeschaltet wird. Dies dient zur Optimierung der Bilderfassung und Ausleuchtung der Prozesszone. Die Beleuchtungsquelle kann in oder an der Kamera angeordnet sein oder an einer anderen Position, und direkt oder indirekt (durch Reflexion) auf die Prozesszone wirken.

Das Berechnen von Konturabweichungen zur kalibrieten Ansteuerung der Laserschneidmaschine kann grundsätzlich an unterschiedlichen ausgewählten Bereichen auf dem Werkstück, das auf einem Arbeitstisch positioniert ist, ausgeführt werden. Damit wird es z.B. möglich, die kritischen Bereiche zur Konturfehlerbestimmung auszuwählen, wie solche mit vielen engen Radien oder komplexen Trajektorieanforderungen. Dies kann z.B. unter Abgleich mit dem zu schneidenden Material und/oder mit Vorgaben aus dem Schneidplan ausgeführt werden, z.B. unter Berücksichtigung des Betrags der Beschleunigung oder der Wegkrümmung. Ersteres, weil auch längs einer Geraden Abweichungen von den Sollinkrementen auftreten können. Diese beeinträchtigen zwar weniger die Konturgenauigkeit, können u.U. aber zu lokalen Unregelmäßigkeiten im Bearbeitungsprozess führen.

In einer vorteilhaften Ausführungsform der Erfindung beinhaltet oder umfasst das Verfahren folgenden Verfahrensschritt:
- Berechnen und Anwenden bzw. Ausführen von Steueranweisungen. Diese Steueranweisungen beinhalten vorteilhafterweise Korrekturinstruktionen, zur Kompensation der ausgegebenen Konturabweichungen. Die Steueranweisungen stellen somit optimierte Steuerwerte der einzelne Achsen (X, Y-Achse) dar. Die Steueranweisungen werden zur (verbesserten) Ansteuerung an das Antriebssystem weitergeleitet. Die Korrekturinstruktionen sind achsspezifisch und beinhalten einen X-Achsen und einen Y-Achsenabschnitt. Die Korrekturinstruktionen dienen zur Kompensation der Konturabweichungen, die durch Masseträgheiten und/oder Nachgiebigkeiten aller beteiligten bewegten Komponenten des Antriebssystems bedingt sind.

Die durch die hier vorgeschlagene Methode berechneten Konturfehler können zusätzlich verwendet werden, um ein Maschinenmodell zu kalibrieren, ein Maschinemodell zu generalisieren (arbeitsraumabhängig anzupassen) und, um die Parametrierung der Regler zu verbessern.

In einer weiteren bevorzugten Ausführungsform der Erfindung kann die Referenztextur eine Gravur sein. Typischerweise wird die Gravur im Vergleich zum Produktivschneiden mit einer geringeren Laserleistung appliziert. Für die Gravur kann ein größerer Düsenabstand und andere Fokuslage als beim Schneiden gewählt werden. Ggf. wird der Laser gepulst (Pulsfrequenz und Pulsbreite (Dauer)). Die Eindringtiefe kann variabel sein; sie sollte so tief gewählt werden, dass man die Gravur in den Bildern sehen kann (insbesondere im Bereich von einigen Mikrometern bis ca. 1mm).

In einer weiteren bevorzugten Ausführungsform der Erfindung wird das Applizieren der Referenztextur in der Applikationsfahrt mit reduzierten Dynamikwerten ausgeführt, die geringer sind als Produktivdynamikwerte. Das Aufbringen in langsamer Fahrt hat den Vorteil, dass die Referenztextur sehr exakt aufgebracht werden kann. In der Bilderfassungsfahrt wird die Referenztextur entlang der Sollbahn mit Produktivdynamikwerten bei deaktiviertem Laser abgefahren und das Erfassen des zumindest eines Bilds in Schritt d) erfolgt währenddessen.

Der Dynamikwert (Vektor bzw. Datensatz) beinhaltet in einer bevorzugten Ausführungsform der Erfindung Angaben zu Geschwindigkeit, Beschleunigung, Ruck und/oder weiteren zeitlichen Ableitungen davon. Es gibt zwei Instanzen des Dynamikwertes: eine Produktivdynamikwert, der bei einer Produktiv(Schneid)-Fahrt gilt und ein reduzierter Dynamikwert, der in den berechneten Steueranweisungen codiert sein kann, um die bestimmten Bahnabweichungen zu kompensieren. Allerdings stehen auch andere Maßnahmen zur Kompensation der Konturabweichungen zur Verfügung (z.B. Verschieben der Steuerwerte um einen Verschiebevektor).

Produktivgeschwindigkeit und/oder Produktivbeschleunigung und/oder Produktivruck ist also die Geschwindigkeit und/oder Beschleunigung und/oder der Ruck, die/der zur Bearbeitung des Werkstücks vorgegeben ist, z.B. im Schneidplan oder in einer Parameterdatei.

Der reduzierte Dynamikwert (Geschwindigkeitswert und/oder Beschleunigungswert und/oder Ruckwert) ist so gewählt, dass er geringer ist der vergleichbare Wert bei Produktivbearbeitung (z.B. Schneiden). Ein typischer geringer Beschleunigungswert liegt im Bereich von: 0.01 - 0.1 m/s^2. Ein typischer (hoher) Beschleunigungswert bei Produktivbearbeitung liegt im Bereich von: 1 - 100 m/s^2.

Vornehmlich wird auf den Beschleunigungswert abgestellt, da die Geschwindigkeit nicht der Hauptfaktor der dynamisch induzierten Fehler ist. Konturfehler können jedoch auch bei tiefen Geschwindigkeiten und hoher Beschleunigung resultieren.

Damit die erfassten Bilder bei Produktivgeschwindigkeit noch ausreichend scharf sind, muss die Belichtungszeit der optischen Erfassungseinrichtung ausreichend klein eingestellt werden. Diese Einstellung ist grundsätzlich abhängig von der Beleuchtungsmethode und der Intensität der Beleuchtung. Bei einem 2Watt Beleuchtungslaser ist eine Belichtungszeit von 30us gut. Belichtungszeiten von 1us-300us sind nützlich. Je höher die Belichtungszeit, desto grösser ist das Motion Blurr (die Bilder verschwimmen). Die Einstellungen können auf einem HMI getätigt werden. Zudem erweist es sich als vorteilhaft, eine Beleuchtung eines Beleuchtungsmittels während der Bilderfassung ausreichend stark einzustellen. Grundsätzlich gilt für die auswählbaren Einstellungen: Je grösser die Beleuchtung umso geringer kann die Belichtung sein.

In einer weiteren bevorzugten Ausführungsform der Erfindung erfolgt das Applizieren der Referenztextur in der Applikationsfahrt mit einem Produktivdynamikwert, der demjenigen entspricht, der bei einer Produktivbearbeitung angewendet wird. In der Bilderfassungsfahrt wird entlang der Sollbahn mit einem reduzierten Dynamikwert bei deaktiviertem Laser abgefahren. Das Erfassen des zumindest eines Bilds in Schritt d) erfolgt während der Bilderfassungsfahrt. Dies entspricht einer zweiten Methode oder Ausführungsform, bei der die Referenztextur mit einem Produktivdynamikwert und insbesondere mit einer Produktivgeschwindigkeit und Produktivbeschleunigung appliziert wird.

Das Abfahren auf der Sollbahn oder entlang der Sollbahn wird ohne einen zum Schneiden aktivierten Bearbeitungslaserstrahl der Bearbeitungsmaschine ausgeführt. Der Laser kann zum Gravieren aktiviert werden und wird dabei mit wesentlich geringerer Leistung betrieben als beim Schneiden. Bei der Applikationsfahrt und bei der Bilderfassungsfahrt ist der Laser zum Schneiden deaktiviert.

In einer weiteren vorteilhaften Ausführungsform der Erfindung erfolgt der Vergleich in Schritt f) an einer Mittelpunktposition der jeweiligen Bilder (Mittelpunkt des virtuellen Rekonstruktionsbildes und Mittelpunkt des zumindest einen erfassten Bilds).

In einer weiteren vorteilhaften Ausführungsform der Erfindung kann die Referenztextur eine auf einem Trägerobjekt applizierte Textur sein. Das Trägerobjekt ist ortsfest an einem Trägerbereich der Laserschneidmaschine für das Werkstück angeordnet und dort positionskalibriert.

In einer weiteren vorteilhaften Ausführungsform der Erfindung ist die Referenztextur eine von einem ortsfest mit der Laserschneidmaschine verbundenen und positionskalibrierten Projektor auf das Werkstück projizierte Textur.

In einer weiteren vorteilhaften Ausführungsform der Erfindung kann die optische Erfassungseinrichtung zumindest eine Kamera umfassen, die im oder am Bearbeitungskopf (vorzugsweise koaxial) oder am Antriebssystem des Bearbeitungskopfes angeordnet ist.

In einer weiteren vorteilhaften Ausführungsform der Erfindung kann aus zumindest einem erfassten Bild eine Istbahn extrahiert werden, also eine Bahn, die tatsächlich mit dem Schneidkopf abgefahren wurde.

In einer weiteren vorteilhaften Ausführungsform der Erfindung wird das Verfahren vor oder während einem Produktivschneidvorgang ausgeführt. Vorzugsweise wird das Verfahren vor dem Produktivschneiden ausgeführt. Es ist jedoch auch möglich, die Referenztextur außerhalb der Schneidzone zu applizieren (aber noch im Sichtfeld der Kamera). Somit kann der Bildabgleich zwecks Konturabweichung während dem Schneiden erfolgen. Wenn das Verfahren vor dem Produktivschneiden angewendet wird, ist der Laser während der Applikationsfahrt und auch während der Bilderfassungsfahrt deaktiviert oder ausgeschaltet (abgesehen vom Gravieren).

In einer weiteren vorteilhaften Ausführungsform der Erfindung erfolgt das Erfassen des zumindest einen Bilds unter Aktivierung eines Beleuchtungsmittels (z.B. Beleuchtungslasers). Typischerweise mit mindestens 50mW. Die Wattzahl ist prinzipiell nach oben nicht beschränkt. Alternative oder kumulative externe Leuchtmittel sind verwendbar. Wichtig ist, dass die Referenztextur gut mit der Schneidkopfkamera erfassbar ist.

Vorstehend wurde die Lösung der Aufgabe anhand des computer-implementierten Verfahrens beschrieben. Dabei erwähnte Merkmale, Vorteile oder alternative Ausführungsformen sind ebenso auch auf die anderen beanspruchten Gegenstände zu übertragen und umgekehrt. Mit anderen Worten können auch die gegenständlichen Ansprüche (die beispielsweise auf eine Recheneinheit, eine Laserschneidmaschine oder auf ein Computerprogramm(produkt) gerichtet sind) mit den Merkmalen weitergebildet sein, die in Zusammenhang mit dem Verfahren beschrieben oder beansprucht sind und umgekehrt. Die entsprechenden funktionalen Merkmale des Verfahrens werden dabei durch entsprechende gegenständliche Module, insbesondere durch Hardware-Module oder Mikroprozessor-Module, des Systems bzw. des Produktes ausgebildet und umgekehrt. Im Allgemeinen sind in der Informatik eine Software-Implementierung und eine entsprechende Hardware-Implementierung (z. B. als eingebettetes System) gleichwertig. So kann z. B. ein Verfahrensschritt zum "Speichern" von Daten mit einer Speichereinheit und entsprechenden Anweisungen zum Schreiben von Daten in den Speicher durchgeführt werden. Um Redundanz zu vermeiden, wird die Vorrichtung deshalb nicht noch einmal explizit beschrieben, obwohl es auch in den alternativen Ausführungsformen, die in Bezug auf das Verfahren beschrieben sind, verwendet werden kann. Die vorstehend im Zusammenhang mit dem Verfahren beschriebenen bevorzugten Ausführungsform der Erfindung werden also nicht explizit für die Vorrichtung wiederholt.

In einem weiteren Aspekt wird die vorstehende Aufgabe gelöst durch eine Recheneinheit zur Ausführung des vorstehend beschriebenen Verfahrens. Die Recheneinheit dient zum Steuern einer Laserschneidmaschine und zum Berechnen von Konturabweichungen die beim Schneiden von Werkstücken mit einem Bearbeitungslaserstrahl der Laserschneidmaschine entstehen können, mit:
- Einer Einleseschnittstelle zum Einlesen eines Schneidplans, der eine Sollbahn für einen Bearbeitungskopf der Laserbearbeitungsmaschine vorgibt; Die Einleseschnittstelle kann auch als
- Einem Referenztexturdefinitionsmodul zum Definieren einer Referenztextur oder zum Einlesen der Referenztextur aus dem Schneidplan; Das Referenztexturdefinitionsmodul kann als eine Eingangsschnittstelle Mensch-Maschine-Schnittstelle (HMI, human machine interface) ausgebildet sein oder eine solche umfassen, über die Eingaben erfasst werden, um die Referenztextur zu bestimmten. Alternativ kann eine "fertige" Referenztextur, z.B. aus einem Speicher, eingelesen werden. Das Referenztexturdefinitionsmodul kann alternativ oder kumulativ als eine lokale Recheneinheit ausgebildet sein, die die Referenztextur dynamisch und/oder spezifisch für die jeweilige Sollbahn berechnet (z.B. bei hoher Schnittspaltbreite wird eine größere Referenztextur gewählt);
- wobei die Recheneinheit ausgebildet ist, erste Instruktionen auszugeben, um eine Applikationsfahrt des Laserschneidkopfes zum Applizieren der Referenztextur zumindest an ausgewählten Positionen entlang der Sollbahn auf dem Werkstück zu veranlassen;
- wobei die Recheneinheit weiterhin ausgebildet ist, zweite Instruktionen auszugeben, um eine Bilderfassungsfahrt des Laserschneidkopfes zum Erfassen von zumindest einem Bild zu veranlassen, in dem zumindest ein Teil der applizierten Referenztextur abgebildet ist, mittels einer am Laserschneidkopf angeordneten optischen Erfassungseinrichtung an zumindest einer der ausgewählten Positionen entlang der Sollbahn;
- wobei die Recheneinheit einen Rekonstruktor umfasst, der ausgebildet ist zur Rekonstruktion zumindest eines virtuellen Rekonstruktionsbildes auf Basis von Steuerwerten, die aus der Sollbahn berechnet werden, und auf Basis der definierten Referenztextur;
- wobei die Recheneinheit weiterhin ein Bildverarbeitungsmittel umfasst, das ausgebildet ist zum Vergleich des erfassten zumindest einen Bilds und des rekonstruierten virtuellen Rekonstruktionsbildes zur Bestimmung eines Verschiebevektors zwischen jeweils zugeordneten Bildpunkten;
- einer Ausgabeschnittstelle, die zum Ausgeben der Konturabweichung, die aus dem bestimmten Verschiebevektor berechnet wird, ausgebildet ist.

In einem weiteren Aspekt betrifft die Erfindung eine Laserschneidmaschine mit einer solchen Recheneinheit.

In einem weiteren Aspekt betrifft die Erfindung eine Laserschneidmaschine zum Ausführen des oben beschriebenen Verfahrens.

In einem weiteren Aspekt betrifft die Erfindung ein Computerprogramm, wobei das Computerprogramm in eine Speichereinheit eines Computers ladbar ist und Programmcodeabschnitte enthält, um den Computer zu veranlassen, das Verfahren zum Bestimmen von Bahnabweichungen zur Steuerung einer Laserschneidmaschine auszuführen, wenn das Computerprogramm in dem Computer ausgeführt wird.

In einem weiteren Aspekt bezieht sich die Erfindung auf ein Computerprogrammprodukt, umfassend ein Computerprogramm, wie oben beschrieben, das ausgebildet ist, ein Verfahren wie vorstehend beschrieben auszuführen. Dabei ist es auch möglich, dass das Computerprogramm auf einem von einem Computer lesbaren Medium gespeichert ist.

In der folgenden detaillierten Figurenbeschreibung werden nicht einschränkend zu verstehende Ausführungsbeispiele mit deren Merkmalen und weiteren Vorteilen anhand der Zeichnung besprochen.

### Kurze Beschreibung der Figuren

- Fig. 1: zeigt verschiedene Prozesse eines Verfahrens gemäß einer bevorzugten Ausführungsform der Erfindung auf einer Zeitachse;
- Fig. 2: ein schematisches Diagramm zur Ansteuerung des Antriebssystems der Laserschneidmaschine mit seinen Komponenten;
- Fig. 3: ein schematisches Diagramm zur Berechnung von Steueranweisungen zur Ansteuerung des Antriebssystems auf Basis von ermittelten Konturabweichungen;
- Fig. 4: ein Blockschaltbild einer Recheneinheit zur Berechnung von Konturabweichungen zur Steuerung einer Laserschneidmaschine mittels Steueranweisungen mit Korrekturinstruktionen;
- Fig. 5: ein Ablaufdiagramm eines Verfahrens zur Berechnung von Konturabweichungen in unterschiedlichen Ausführungsformen;
- Fig. 6: eine schematische Darstellung eines Laserschneidkopfes;
- Fig. 7: eine schematische Darstellung einer Sollbahn und einer Istbahn;
- Fig. 8a: ein Beispiel eines virtuellen Rekonstruktionsbildes und

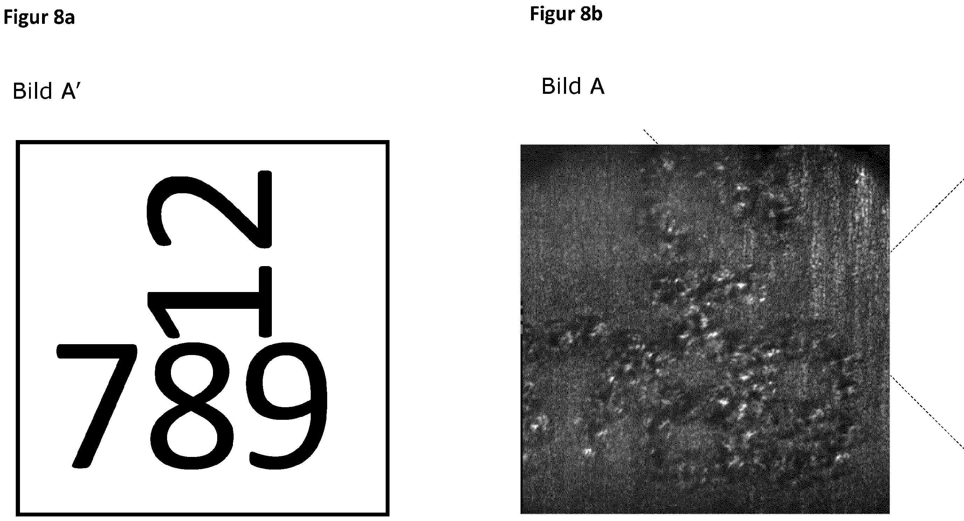

- Fig.8 b: ein Beispiel eines real erfassten Bilds an derselben Position wie derjenigen in Fig 8a;

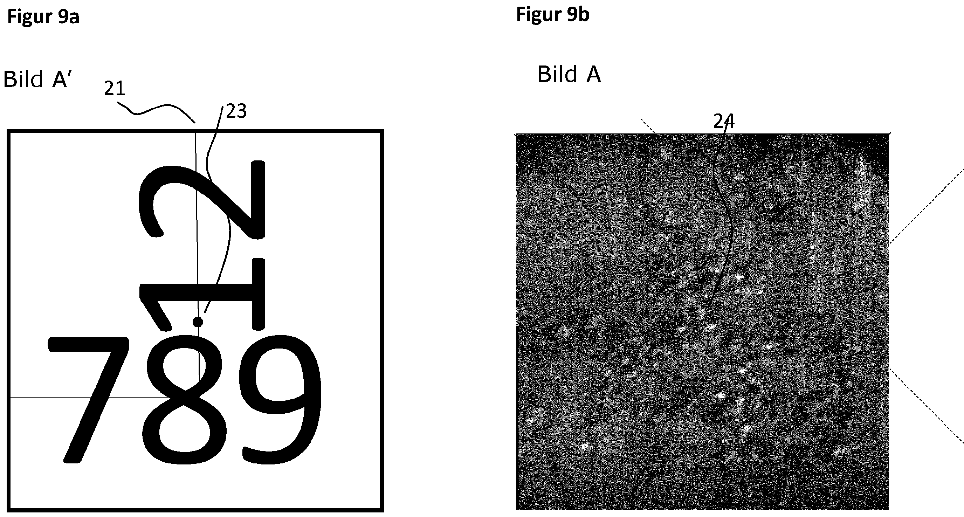

- Fig. 9a: ein Beispiel eines virtuellen Rekonstruktionsbildes und
- Fig. 9b: ein Beispiel eines real erfassten Bilds an derselben Position wie derjenigen in Fig. 9a;

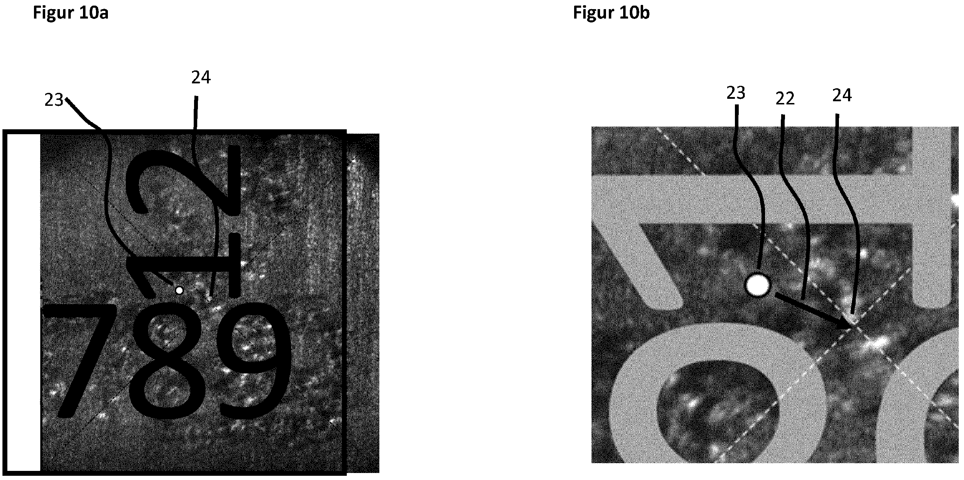

- Fig. 10a: ein Beispiel für einen Vergleich des erfassten Bilds und des virtuellen Rekonstruktionsbildes und
- Fig. 10b: eine vergrößerte Darstellung der Mittelpunkte der in Fig. 10a gezeigten Bilder;

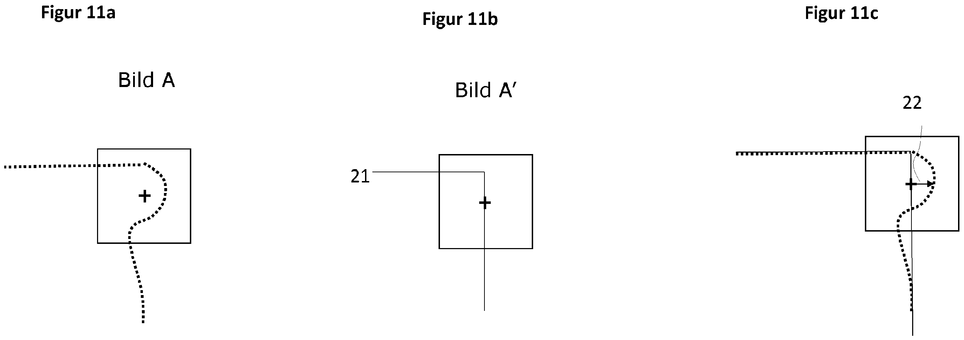

- Fig. 11a: eine schematische Darstellung eines erfassten Bilds bei einer Ecke der Sollbahn,
- Fig. 11b: eine schematische Darstellung des virtuellen Rekonstruktionsbildes an derselben Position wie in Fig. 11a und
- Fig. 11c: eine schematische bildliche Repräsentation des Ergebnisses des Bildverarbeitungsmittels (BV) zum Berechnen des Verschiebevektors und

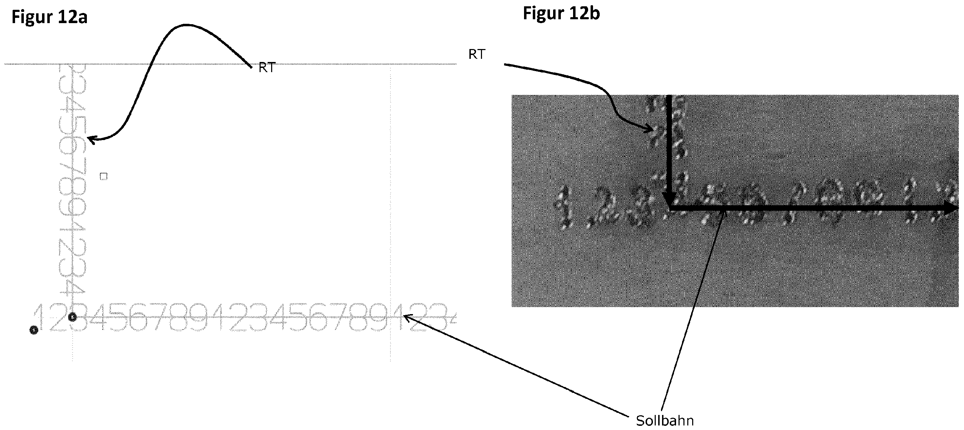

- Fig. 12a: ein Beispiel für eine Referenztextur und
- Fig. 12b: die auf dem Werkstück applizierte Referenztextur von Fig. 12a;

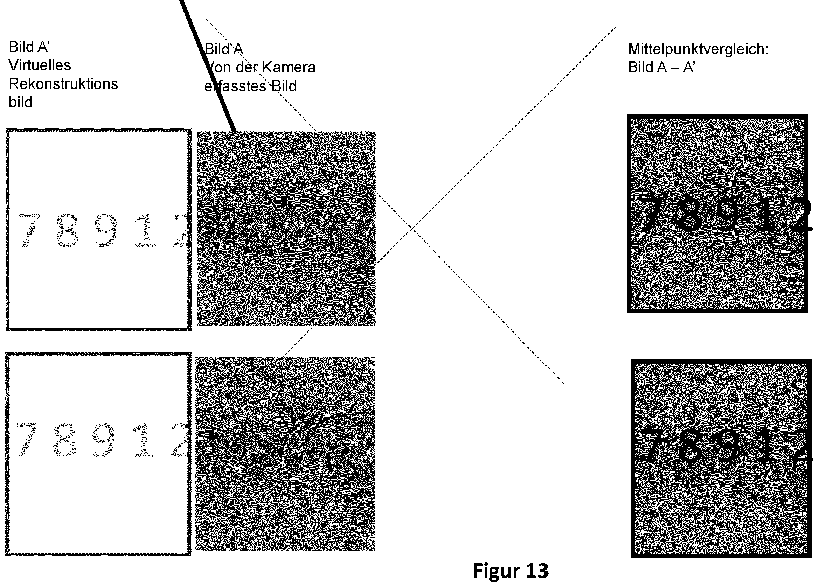

- Fig. 13: eine beispielhafte Ausführung einer ersten Methode und

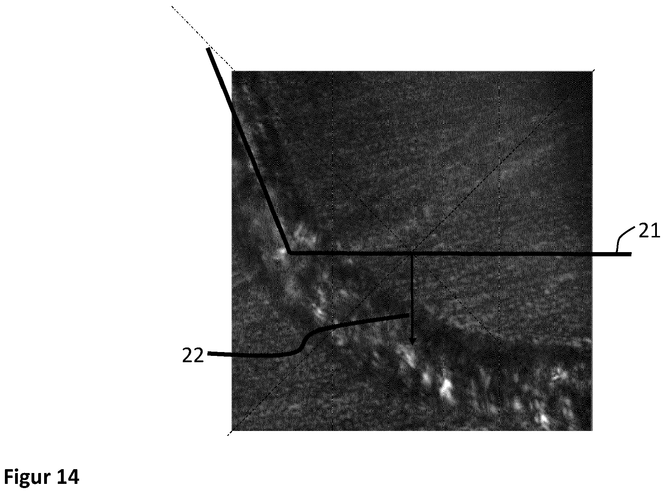

- Fig. 14: eine beispielhafte Ausführung einer zweiten Methode;

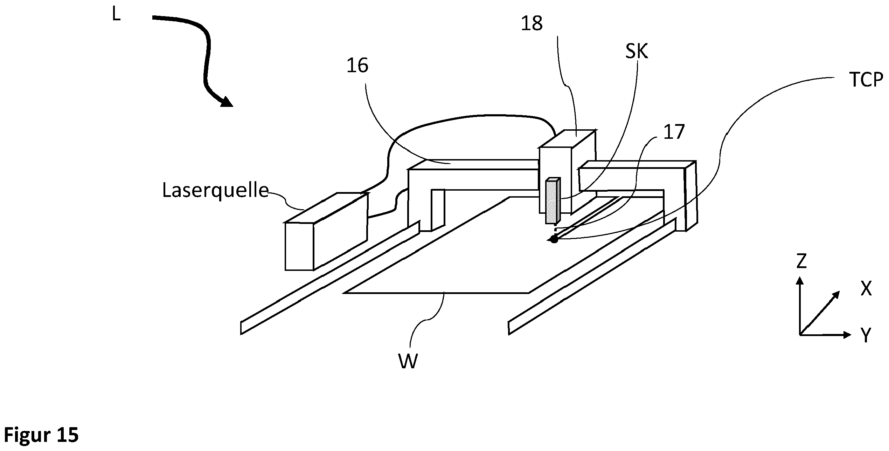

- Fig. 15: eine Frontansicht einer Laserschneidmaschine,

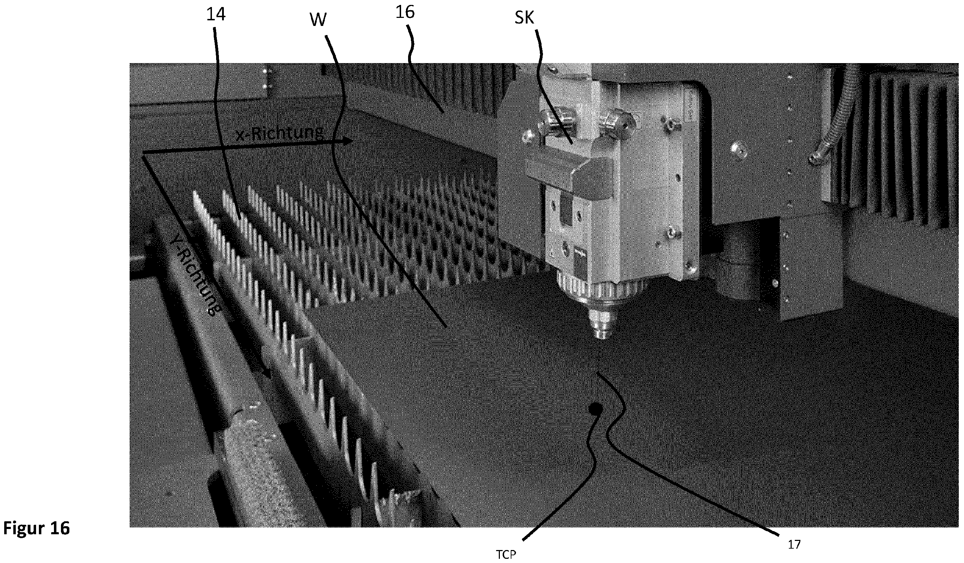

- Fig. 16: eine Darstellung einer Laserschneidanlage mit einem Schneidtische und einem Schneidkopf,

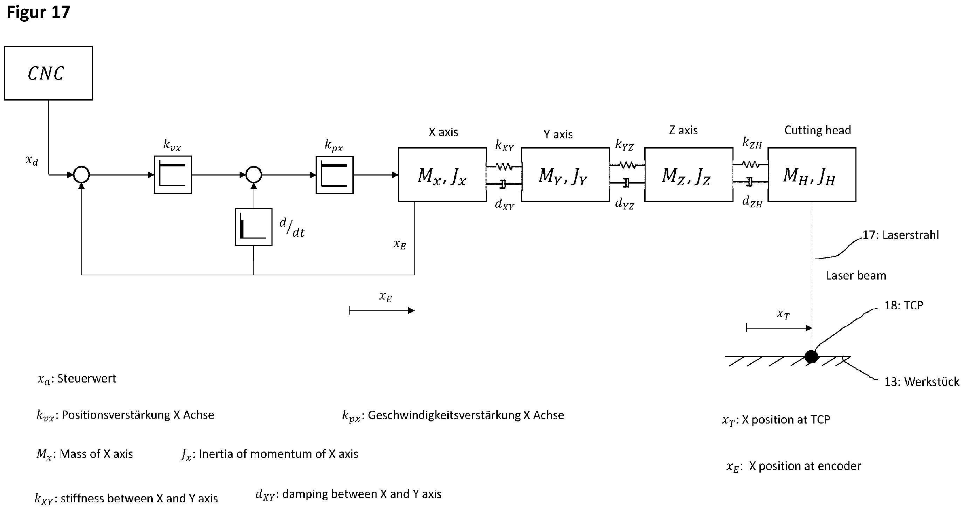

- Fig. 17: ein kaskadierter Regelkreis eines Maschinenantriebs am Beispiel der X-Achse und

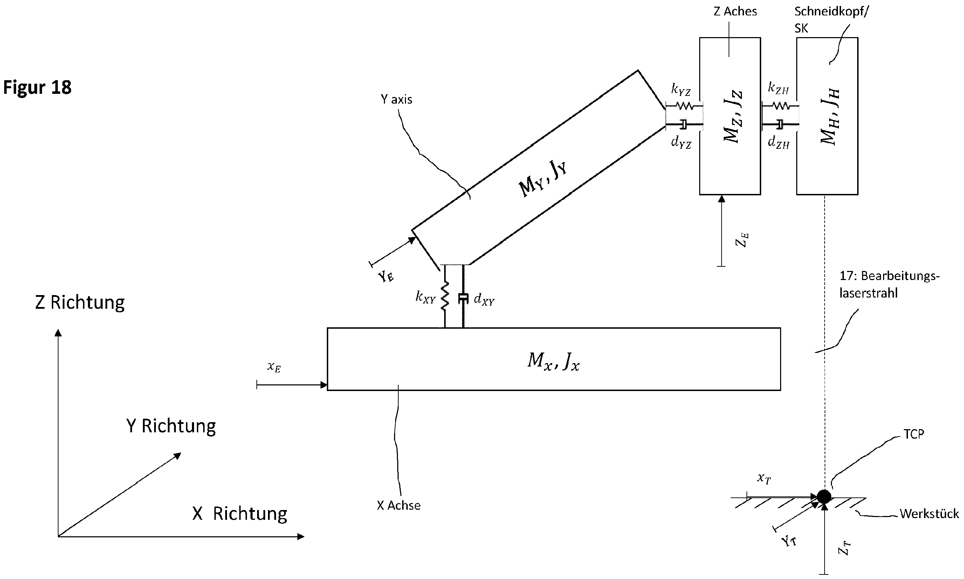

- Fig. 18: eine Übersichtsdarstellung des Achssystems der Laserschneidmaschine und

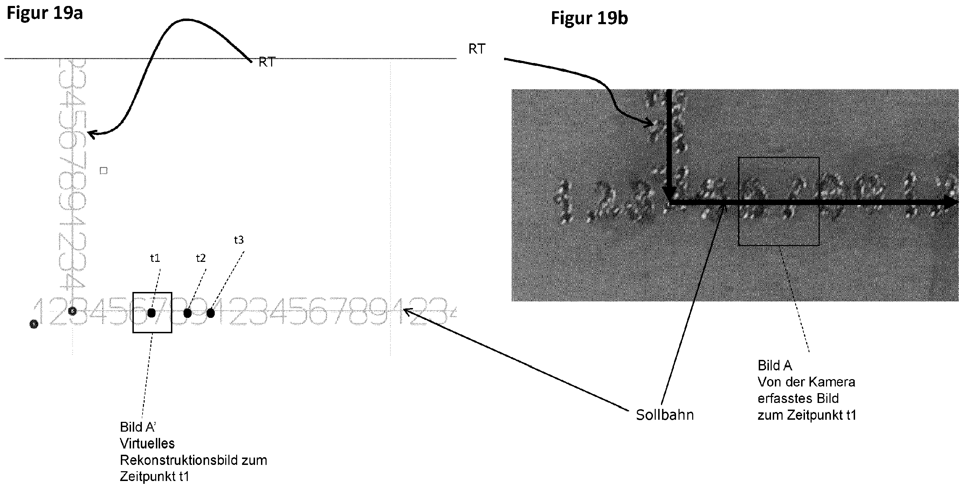

- Fig. 19a: bis
- 19d: eine Darstellung von virtuellem Rekonstruktionsbild und einem zugeordneten von der Kamera erfassten Bild.

### Detaillierte Beschreibung von Ausführungsbeispielen anhand der Figuren

Die vorliegende Erfindung betrifft die Steuerung einer Laserschneidmaschine L zur Kompensierung von berechneten Bahnabweichungen bzw. Konturabweichungen, die durch Trägheiten und/oder Nachgiebigkeiten der bewegten Masse der am Schneidprozess beteiligten Komponenten der Laserschneidmaschine L verursacht sind.

Noch vor Ausführung von einem Produktivschneidvorgang (also einem Schneiden von Konturen gemäß Schneidplan in dem Werkstück) können die Konturabweichungen ermittelt werden.

Zur Bestimmung möglicher Bahnabweichungen einer Ist-Bahn (wie vom Schneidkopf abgefahren) von einer Soll-Bahn (gemäß Vorgaben aus dem Schneidplan) wird vorgeschlagen, einen Schneidkopf mit einer Kamera zu verwenden und in einem Kalibrierverfahren die Bahnabweichungen (insb. Bei Ecken) zu ermitteln, entsprechende Korrekturinstruktionen zu errechnen und diese dann während der (anschließenden) produktiven Teilebearbeitung anzuwenden, wodurch die Bahnabweichungen geringer werden und/oder die Teilezeit bei gleichbleibender Bahnabweichung reduziert wird.

In einer ersten Ausführungsform der Erfindung sind folgende Schritte vorgesehen (Methode 1, vgl. auch Fig. 13, s. unten):
1. Soll-Bahn bestimmen. Als Soll-Bahn ist die Geometrie gemeint, welche über der Referenztextur liegt.
2. Applikationsfahrt: Referenztextur (beispielsweise eine Zahlenreihe) definieren und mit dem Bearbeitungslaser auf ein Blech entlang der Soll-Bahn aufbringen (gravieren). Dabei werden die Maschinenachsen langsam bewegt, so dass vernachlässigbare Ungenauigkeiten in der Werkzeug-Positionierung zu erwarten sind. Kein spezielles Blech ist nötig, es kann z.B. gleich dieses verwendet werden, welches als nächstes bearbeitet werden soll.
3. Bilderfassungsfahrt: Mit hoher Geschwindigkeit bzw. mit Produktionsgeschwindigkeit die Soll-Bahn abfahren (ohne zu schneiden), wobei die Kamera an interessierenden Stellen Einzelbilder (Bild A) aufnimmt. Dabei werden die Encoder-Werte am Ort A während der Aufnahme von Bild A gespeichert. Zwecks optimierter Kameraaufnahmen kann synchron zur Bildaufnahme auch ein Beleuchtungslaser eingeschaltet werden.
4. Bildverarbeitung: Abgleich (Matching) zwischen virtuellem Soll-Bild (Bild A'), welches anhand des der Maschinensteuerung bekannten Musters und den exakten Encoderwerten eruiert werden kann, mit dem aufgezeichneten Ist-Bild (Bild A).
5. Berechnung der Konturabweichung (Soll-Ist), d.h. Bestimmen des Verschiebevektor (Dx, Dy) zwischen virtuellem Rekonstruktionsbild (Bild A') und dem tatsächlich aufgenommenen Ist-Bild (Bild A).
6. Kompensieren der Konturabweichung durch Anpassung der Solltrajektorie (oder Sollgeometrie) mittels Korrekturinstruktionen.
7. Produktiv Schneiden mit Steueranweisungen, die die Korrekturinstruktionen umsetzen.

Bei dieser ersten Methode werden bei Schritt 4 (Bildvergleich) die jeweiligen Bildmittelpunkte des virtuellen Rekonstruktionsbildes und des entsprechenden mit der Kamera erfassten Bilds verglichen.

In einer zweiten Ausführungsform der Erfindung wird entgegen der oben beschriebenen Methode 1 mit hoher (produktionsrelevanter) Geschwindigkeit eine Gravur appliziert (Applikationsfahrt), welche die Ist-Kurve darstellt. Im zweiten Schritt wird mit geringer Geschwindigkeit an den interessierenden Stellen entlang der Soll-Kurve mit der Schneidkopfkamera diese Ist-Kurve fotografiert (Bilderfassungsfahrt). Vergleich der Soll- und Ist-Kurve liefert den gesuchten Verschiebevektor (Dx, Dy) zwischen Soll und Ist.

Bei Methode 2 (vgl. auch Fig. 14, s. unten) sind folgende Schritte vorgesehen:
1. Soll-Bahn bestimmen, typischerweise mit Ecken oder engen Radien.
2. Applikationsfahrt: Referenztextur definieren, die auch mit hohem Achsvorschub auf das Blech graviert werden kann. Meistens ist dies schlicht nur eine (ausgezogene oder gepunktete) Linie. Mit dem Bearbeitungslaser wird die Referenztextur auf ein Blech möglichst entlang der Soll-Bahn aufgebracht bzw. appliziert (insbesondere graviert). Dabei werden die Maschinenachsen schnell bzw. mit Produktionsgeschwindigkeit oder mit hohen Dynamikwerten bewegt, so dass mit Ungenauigkeiten in der Werkzeug-Positionierung insbesondere in Ecken zu rechnen ist. Kein spezielles Blech ist nötig, es kann z.B. gleich dieses verwendet werden, welches als nächstes bearbeitet werden soll.
3. Bilderfassungsfahrt: Mit geringer Geschwindigkeit die Soll-Bahn abfahren bzw. an der interessierenden Soll-Stelle stillstehen, wobei die Kamera ein Einzelbild (Bild A) aufnimmt. Dabei sind die Encoder-Werte am Ort A während der Aufnahme von Bild A bekannt. Zwecks optimierter Kameraaufnahmen kann synchron zur Bildaufnahme auch der Beleuchtungslaser eingeschaltet werden.
4. Vergleich (Matching) zwischen virtuellem Rekonstruktionsbild (Bild A'), welches anhand exakten Encoderwerten bekannt ist, mit dem aufgezeichneten Ist-Bild (Bild A).
5. Berechnung der Konturabweichung, d.h. Bestimmen des Verschiebevektor (Dx, Dy) zwischen virtuellem Soll-Bild (Bild A') und dem tatsächlich aufgenommenen Ist-Bild (Bild A)
6. Kompensieren der Konturabweichung durch Anpassung der Solltrajektorie (oder Sollgeometrie)
7. Produktiv Schneiden

Im Gegensatz zu Methode 1 können in Methode 2 nicht die Mittelpunkte der Bilder A und A' verglichen werden, um den Verschiebevektor zu bestimmen. Denn Bild A und A' unterscheiden sich nur darin, dass die Bahntrajektorien zwischen Soll und Ist unterschiedlich sind. Der Verschiebevektor ist daher nicht ganz so einfach bestimmbar. Welcher Punkt der Ist-Bahn dem Mittepunkt von Bild A' entspricht, nicht ganz so einfach bestimmbar. In erster Näherung kann jedoch angenommen werden, dass der Verschiebevektor senkrecht zur Ist-Bahn angenommen werden kann.

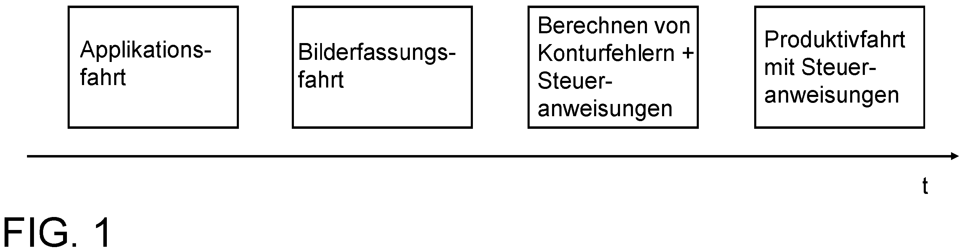

**Fig. 1** zeigt in einer Zeitstrahlansicht mit horizontaler Zeitachse t, dass zur Bestimmung der Konturabweichungen ka mehrere Fahrten mit dem Schneidkopf SK ausgeführt werden: Zunächst wird eine Applikationsfahrt ausgeführt, zum Applizieren einer Referenztextur RT auf das Werkstück W; dies kann durch Gravieren der Referenztextur RT auf das Werkstück entlang der Sollbahn erfolgen. Anschließend erfolgt eine Bilderfassungsfahrt zur Erfassung von Bildern b, die den Bereich des Tool Center Points (TCP) auf dem Werkstück abbilden. Die optische Erfassungseinrichtung kann in Form einer im Schneidkopf angeordneten Kamera ausgebildet sein. Anschließend erfolgt ein Berechnen von Steueranweisungen, die Korrekturinstruktionen beinhalten, um die zuvor mittels Bildvergleich zwischen den real erfassten Bildern der Bilderfassungsfahrt und virtuellen Rekonstruktionsbildern bestimmten Konturabweichungen zu kompensieren. Anschließend kann eine Produktivfahrt zum Schneiden der Teile gemäß Schneidplan erfolgen und zwar mittels der berechneten Steueranweisungen und somit mit Kompensation der durch Masseträgheiten und/oder Nachgiebigkeiten verursachten Konturfehler. In der Applikationsfahrt kann der Laser zum Gravieren verwendet werden; er ist jedoch zum Schneiden deaktiviert. Auch in der Bilderfassungsfahrt ist der Laser deaktiviert.

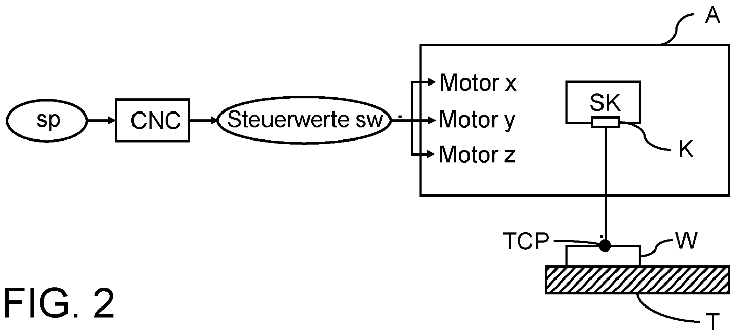

**Fig. 2** zeigt eine schematische Darstellung von Datensätzen und Zwischenergebnissen, die für das Verfahren relevant sind. Der Schneidplan sp wird von einer Instanz über eine Schnittstelle eingelesen oder anderweitig bereitgestellt. Der Schneidplan sp wird einer Steuerung, insbesondere einer CNC-Steuerung (Computerized Numerical Control) CNC übergeben, die daraus Steuerwerte sw berechnet. Die Steuerwerte sw werden an ein Antriebssystem A zur Bewegung von Komponenten des Laserschneidkopfes SK weitergegeben. Das Antriebssystem A umfasst üblicherweise drei Motoren, um zumindest eine Komponente des Schneidkopfes SK in den drei Raumachsen (X-Achse, Y-Achse und Z-Achse) zu bewegen. Ein erster Steuerwert sw1 kann zur Ansteuerung eines ersten Motors in X Achsenrichtung, ein zweiter Steuerwert sw2 kann zur Ansteuerung eines zweiten Motors in Y Achsenrichtung und ein dritter Steuerwert sw3 kann zur Ansteuerung eines dritten Motors in Z Achsenrichtung ausgegeben werden. Die Motoren dienen zur direkten oder indirekten Bewegung des Schneidkopfes SK. An dem Schneidkopf SK ist vorzugsweise koaxial eine optische Erfassungseinrichtung, zum Beispiel in Form einer Kamera K angeordnet. Die Kamera K dient zur Erfassung von Bildern des Werkstücks W im Bereich des sogenannten Tool Center Points TCP. Das Werkstück W kann beispielsweise ein Metallblech oder ein anderes flächiges Werkstück sein, dass auf einem Arbeitstisch T liegt.

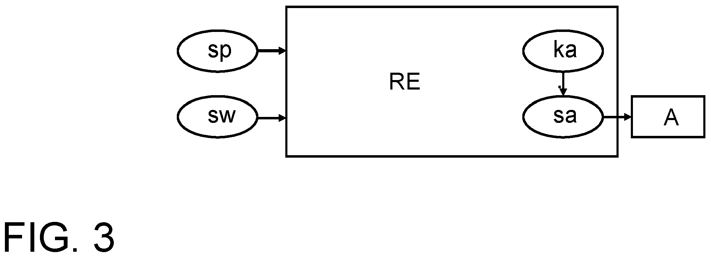

**Fig. 3** zeigt die von einer Recheneinheit RE verarbeiteten Datensätze gemäß einer vorteilhaften Ausführungsform der Erfindung. Es werden der Schneidplan sp und die Steuerwerte sw eingelesen. Zumindest aus diesen Werten kann die Recheneinheit RE die Konturabweichungen ka ermitteln. Die ermittelten Konturabweichungen ka können - insbesondere auch vor dem Berechnen der Steueranweisungen sa - auf einer Benutzerschnittstelle ausgegeben werden. Aus den ermittelten Konturabweichungen ka können - insbesondere von der Recheneinheit RE - Steueranweisungen sa berechnet werden, die Korrekturinstruktionen ki umfassen. Die Korrekturinstruktionen ki dienen dazu, die ermittelten Konturabweichungen ka, die aufgrund der Masseträgheit oder der Nachgiebigkeit der bewegten Komponenten entstehen, zu kompensieren. Die Steueranweisungen sa werden an das Antriebssystem A zur Ansteuerung weitergeleitet.

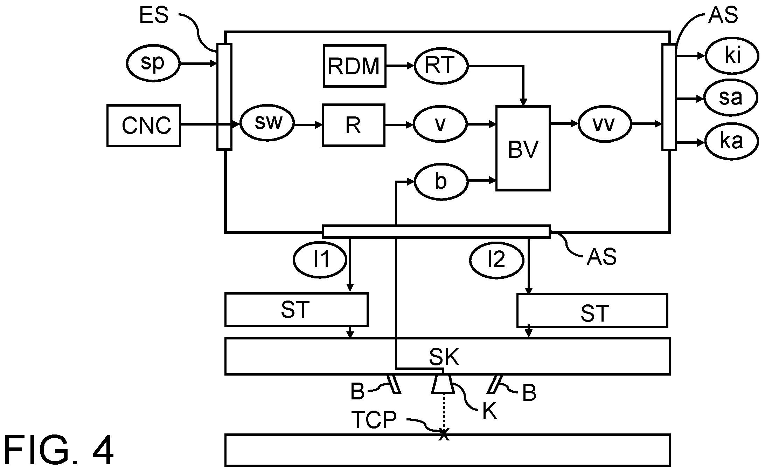

**Fig. 4** ist ein Blockdiagramm der Recheneinheit RE. Die Recheneinheit RE umfasst eine Eingangsschnittstelle ES, über die der Schneidplan sp eingelesen werden kann. Aus dem Schneidplan sp können Steuerwerte sw ermittelt werden. Dies kann auf einer Steuerung CNC erfolgen. Die Recheneinheit RE umfasst des Weiteren ein Referenztexturdefinitionsmodul RDM. Das Referenztexturdefinitionsmodul RDM ist dazu eingerichtet, eine Referenztextur RT zu definieren (insbesondere über Eingaben auf einer Mensch-Maschine-Schnittstelle/HMI) oder eine bereits definierte Referenztextur RT (zum Beispiel aus einer externen Datenbank) einzulesen. Des weiteren umfasst die Recheneinheit RE einen Rekonstruktor R. Der Rekonstruktor R ist dazu eingerichtet, auf Basis von Steuerwerten sw und der definierten Referenztext RT ein virtuelles Rekonstruktionsbild v zu erzeugen bzw. zu rekonstruieren. Die Recheneinheit RE weist des weiteren ein Bildverarbeitungsmittel BV auf, das beispielsweise als Bildverarbeitungsalgorithmus implementiert sein kann und dazu bestimmt ist, das real mittels der Kamera K erfasste Bild b mit dem vom Rekonstruktor R rekonstruierte virtuelle Rekonstruktionsbild v abzugleichen. Dazu umfasst der Bildverarbeitungsalgorithmus ein Referenzierungsmittel, um die jeweiligen realen und virtuellen Bilder b, v einander zuordnen zu können. Das Referenzierungsmittel kann auf Basis der Steuerwerte sw fungieren. Die Zuordnung Referenztextur und Steuerwert ist eindeutig. Nun kann man aus dem Schneidplan für jeden Zeitpunkt t das virtuelle Bild extrahieren. Siehe dazu Figuren 19a-19d. Die Berechnung der Konturabweichung (und entsprechend des Verschiebevektors) ist in Figuren 10a und 10b zu sehen.

Insbesondere wird ein Verschiebevektor vv berechnet, der die Konturabweichungen zwischen der tatsächlich gefahrenen ist Bahn und der intendierten Sollbahn (auf aus dem Schneidplan sp) repräsentiert. Aus dem Verschiebevektor vv kann somit die Konturabweichung ka ermittelt bzw. berechnet werden. Die Konturabweichung ka kann über eine Ausgabe Schnittstelle AS ausgegeben werden.

Wie vorstehend bereits erwähnt, kann die berechnete Konturabweichung ka weiterverwendet werden, um Steueranweisungen sa zu berechnen, die Korrekturinstruktionen ki umfassen, um die Konturfehler auszugleichen. Die berechneten Steueranweisungen sa werden zur massenträgheitsbereinigten Ansteuerung des Antriebssystems A verwendet.

Die Recheneinheit RE steht in Datenaustausch mit einer elektronischen Steuerung ST für den Schneidkopf SK. Die Recheneinheit RE überträgt erste Instruktionen I1 an eine elektronische Steuerung ST, um eine Applikationsfahrt des Laserschneidkopf SK zu triggern. Die Recheneinheit RE überträgt zweite Instruktionen I2 an die elektronische Steuerung ST, um eine Bilderfassungsfahrt des Laserschneidkopfes SK zu instruieren. Des weiteren werden die von der Kamera K erfassten Bilder b über eine Schnittstelle der elektronischen Steuerung ST an die Recheneinheit RE übermittelt. Fakultativ kann eine Beleuchtungseinheit B zur Beleuchtung der Prozesszone vorgesehen sein. Insbesondere werden die erfassten Bilder b an das Bildverarbeitungsmittel BV weitergeleitet, das daraufhin ausgelegt ist, diese mit den virtuellen Rekonstruktionsbildern v abzugleichen, um den Verschiebevektor vv zu bestimmen.

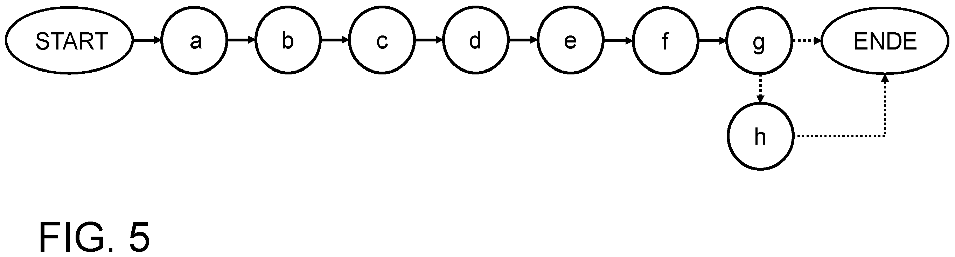

**Fig. 5** ist ein Ablaufdiagramm des Verfahrens zum Bestimmen von Konturabweichung ka, die zur konturabweichungskompensierten Ansteuerung des Laserschneidkopfes SK verwendet werden. Nach dem Start des Verfahrens erfolgt in Schritt a das Einlesen des Schneidplans sp, in dem die Sollbahn vorgegeben ist. In Schritt b wird die Referenztextur RT definiert. Dies kann entweder manuell über eine Mensch-Maschine-Schnittstelle erfolgen oder die Referenztextur RT wird über eine Schnittstelle aus einem externen Datenspeicher eingelesen. In einer ersten Ausführungsform ist die Referenztextur RT als grafisches Muster, insbesondere als Kombination von Zahlen und/oder Buchstaben ausgebildet. In einer zweiten Ausführungsform kann die Referenztextur RT linienartig ausgebildet sein und mitunter der Sollbahn entsprechen. In einer bevorzugten Weiterbildung der Erfindung kann die Referenztextur RT abhängig von der zu schneidenden Sollbahn definiert werden. Beispielsweise kann die Höhe der Referenztextur RT an die Düsenbreite angepasst sein. In Schritt c wird eine Applikationsfahrt zum Applizieren und insbesondere Gravieren der Referenztextur RT auf das Werkstück W entlang der Sollbahn ausgeführt. In Schritt d wird die Bilderfassungsfahrt zur Bilderfassung mittels der Kamera K ausgeführt. In Schritt e erfolgt das Rekonstruieren des virtuellen Rekonstruktionsbildes v. In Schritt f wird das Bildverarbeitungsmittel BV angewendet, um ein Matching zwischen dem virtuellen Rekonstruktionsbild v und dem jeweiligen erfassten Bild b an derselben übereinstimmenden Position zu bestimmen, um daraus den Verschiebevektor vv abzuleiten. Die Referenzierung zwischen dem Bild und dem virtuellen Rekonstruktionsbild v erfolgt über die Steuerwerte sw. Die Steuerwerte sind zeit-basiert. Zu jedem Zeitpunkt t sind die Steuerwerte (x_d(t) und y_d(t)) bekannt. Um das virtuelle Bild bestimmen/rekonstruieren zu können, benötigt man die Position auf der Sollbahn, an der das Bild aufgenommen worden ist. Dadurch kann der Abgleich zwischen virtuellem und tatsächlich aufgenommenem Bild berechnet werden.

In Schritt g wird aus dem Verschiebevektor vv die Konturabweichung ka berechnet und ausgegeben. Danach kann das Verfahren enden. In einer vorteilhaften Ausführungsform schließt sich jedoch der Schritt h an, in dem aus den berechneten Konturabweichung ka Steueranweisungen sa berechnet werden, um das Antriebssystem A mittels der Korrekturinstruktionen ki zur Kompensation der Konturabweichung ka anzusteuern.

Nach Durchführung dieser Schritte, kann das bessere System zum Produktivschneiden verwendet werden. Dabei ist das Lasersystem vorzugsweise in Hinblick auf die jeweiligen mechanischen Komponenten des Lasersystems kalibriert.

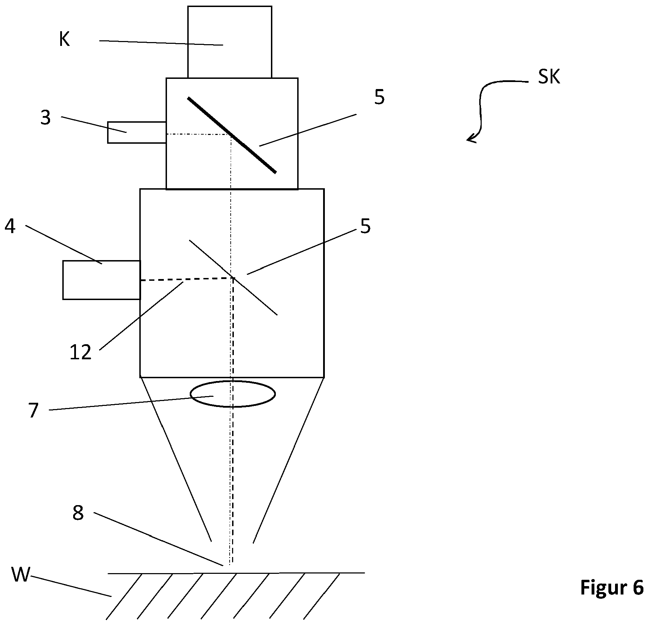

**Fig. 6** zeigt einen Schneidkopf SK einer Laserbearbeitungsmaschine, der eine Kamera K adaptiert hat, deren Sichtfeld (FoV, field of view) idealerweise koaxial zum Bearbeitungslaserstrahl auf den Prozess schaut. Mit dieser Anordnung der Kamera K wird stets die Prozess- bzw. Schneidzone verfolgt, was ermöglicht, dass allfällige Konturabweichungen festgestellt werden können. Zur weiteren Optimierung der Prozessbeobachtung ist eine koaxiale Prozessbeleuchtung 3 adaptiert (mit einem gestrichelt dargestellten Beleuchtungslaserstrahl), welche den Prozessort 8 auf dem Werkstück W beleuchtet. Im Strahlengang 12 des Bearbeitungslaserstrahls sind optische Umlenkelemente 5 und/oder Linsen 7 angeordnet. Eine Laserquelle 4 kann den Bearbeitungslaserstrahl über geeignete optische Elemente, wie z.B. optische Linsen 7 auf das Werkstück W fokussieren.

Zur Bestimmung möglicher Bahnabweichungen ist mit oben beschriebenem Schneidkopf SK vorgeschlagen, in einem Kalibrierverfahren die Bahnabweichungen (insb. bei Ecken) zu ermitteln, entsprechende Korrekturinstruktionen ki zu berechnen und diese dann für und während der produktiven Teilebearbeitung anzuwenden, wodurch die Bahnabweichungen geringer und/oder die Teilezeit bei gleichbleibender Bahnabweichung reduziert wird.

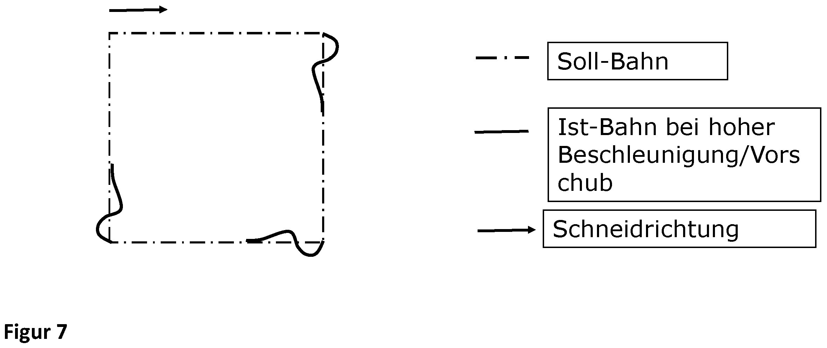

Wie in **Fig. 7** schematisch dargestellt, erfolgen Konturabweichungen insbesondere in Ecken oder engen Radien. Die Soll-Bahn ist in Fig. 7 als Strich-Punkt-Linie dargestellt und die Schneidrichtung ist mit dem Pfeil gekennzeichnet. Je nach Geschwindigkeit (Vorschub des Schneidkopfes SK) weicht die tatsächlich gefahrene Bahn, also die Istbahn (in Fig. 7 mit durchgezogener Linie dargestellt) von der Soll-Bahn ab. Insbesondere bei hohen Geschwindigkeiten und/oder Beschleunigungen wird die tatsächlich mit dem Schneidkopf SK abgefahrene Ist-Bahn von der Soll-Bahn abweichen. In den Ecken wird die Ist-Bahn typischerweise die Soll-Bahn überschwingen.

Die zu erwartenden Konturabweichungen können dynamikabhängig sein. Je höher die Achsbeschleunigungen und/oder Geschwindigkeiten gewählt werden, umso grösser sind die zu erwartenden Abweichungen.

Um dies zu vermeiden, werden automatisch berechnete Anpassungen vorgenommen, die auf Basis von berechneten Korrekturinstruktionen ki umgesetzt werden.

**Fig. 8a** zeigt ein virtuelles Rekonstruktionsbild v als Bild A' und **Fig. 8b** ein mit der Kamera K (real) erfasstes Bild b als Bild A. Diese beiden Bilder v, b werden dem Bildverarbeitungsmittel BV zum Bild-Matching zugeführt.

**Fig. 9a** zeigt ein virtuelles Rekonstruktionsbild v als Bild A' und **Fig. 9b** ein real mit der Kamera K erfasstes Bild b als Bild A. In Bild A' (Fig. 9a) ist zur Erläuterung die Sollbahn, hier mit dem Bezugszeichen 21 gekennzeichnet, und einem Bildmittelpunkt 23 dargestellt. In realen Bild A (Fig. 9b) wird der Bildmittelpunkt rekonstruiert und ist mit dem Bezugszeichen 24 gekennzeichnet. Die Sollbahn und der jeweilige Bildmittelpunkt sind nicht Bestandteil des Bilds und hier nur zur besseren Verständlichkeit hinzugefügt.

Die Zuordnung Referenztextur und Steuerwert ist eindeutig. Nun kann man aus dem Schneidplan für jeden Zeitpunkt t das virtuelle Bild extrahieren (siehe dazu Figuren 19a-19d, unten). Die Berechnung der Konturabweichung (und entsprechend des Verschiebevektors) ist in Figuren 10a und 10b zu sehen.

**Fig. 10a** zeigt ein Matching bzw. den Bildvergleich der beiden Bilder in Form einer Überlagerung des realen Bilds über dem virtuellen Rekonstruktionsbild mittels der jeweiligen Bildmittelpunkte 23, 24 (vgl. Fig. 9). **Fig. 10b** zeigt die Matchingdarstellung aus Fig. 10a in vergrößerter Ansicht. Der in Fig. 10b dargestellte gezoomte Ausschnitt um die Mittelpunkte 23, 24 zeigt, dass die Bildmittelpunkte nicht perfekt koinzidieren. Der Verschiebevektor vv ist in Fig, 10b mit dem Bezugszeichen 22 gekennzeichnet.

**Fig. 11a** zeigt eine schematische Ansicht eines mit der Kamera K aufgenommen Bilds mit der gepunktet dargestellten Istbahn und dem Bildmittelpunkt, der als Kreuz gekennzeichnet ist. **Fig. 11b** zeigt das virtuelle Rekonstruktionsbild als Bild A' mit der Sollbahn 21 und dem Bildmittelpunkt, der ebenfalls als Kreuz gekennzeichnet ist. Fig. 11c zeigt schematisch das überlagerte Bild für den Bildvergleich des Bildverarbeitungsmittels BV. Der Verschiebevektor v ist hier mit dem Bezugszeichen 22 gekennzeichnet.

**Fig. 12a** ist ein Beispiel einer Referenztextur RT in Form einer Zahlenreihe in einem virtuellen Rekonstruktionsbild und **Fig. 12b** zeigt ein entsprechendes real erfasstes Bild, in dem die applizierte Gravur der Referenztextur RT zu sehen ist an der gleichen Position.

**Fig. 13** zeigt an einem Beispiel die Ausführung der Methode 1 (erste Ausführungsform der Erfindung, siehe oben). Auf der linken Seite ist das jeweilige Bildtupel aus virtuellem Rekonstruktionsbild (Bild A') und von der Kamera erfassten Bild (Bild A) dargestellt und auf der rechten Seite ist der Bildvergleich (Mapping) dargestellt. Im oberen Beispiel ergibt sich eine relativ gute Passung/Übereinstimmung. Im unteren Beispiel ergibt sich eine schlechte Übereinstimmung und damit eine hohe Konturabweichung.

**Fig. 14** zeigt an einem Beispiel die Anwendung bzw. Ausführung der Methode 2 (zweite Ausführungsform der Erfindung, siehe oben). Die Referenztextur RT ist hier genau entlang und insbesondere exakt auf der Sollbahn appliziert und ist mit dem Bezugszeichen 21 und der Verschiebevektor vv mit dem Bezugszeichen 22 gekennzeichnet. Aus dem Verschiebevektor vv wird die Konturabweichung ermittelt, die dann Bestandteil der kalibrierten Steueranweisungen sa mit den Korrekturinstruktionen ki ist.

**Fig. 15** zeigt eine Frontansicht einer Laserschneidmaschine L in einer schematischen Darstellung mit einem Schneidrost (nur angedeutet), auf dem ein zu bearbeitendes Werkstück W positioniert ist und einem Schneidkopf SK, einem Bearbeitungslaserstrahl 17 und einem Tool Center Point TCP. Mit dem Bezugszeichen 16 ist die Brücke (Y-Achse) bezeichnet und mit dem Bezugszeichen 18 die Z-Achse.

**Fig. 16** ist eine Darstellung einer Laserschneidmaschine L mit einem Schneidrost 14, einem Werkstück W, einem Schneidkopf SK, der an der Brücke 16 angeordnet ist und einem Bearbeitungslaserstrahl 17 und dem Tool Center Point TCP.

**Fig. 17** zeigt schematisch einen kaskadierten Regelkreis eines Maschinenantriebs am Beispiel der X Achse.

**Fig. 18** ist eine Übersichtsdarstellung des Achssystems.

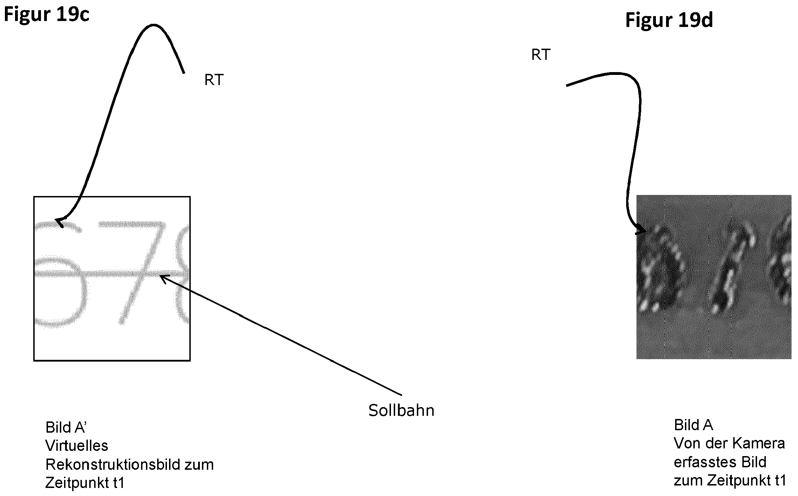

Fig. 19 a bis d zeigt Darstellungen von einem virtuellem Rekonstruktionsbild und einem mit der Kamera erfassten Bild. Die Referenztextur RT wird auf oder entlang der Sollbahn appliziert. In Fig. 19a ist beispielhaft ein virtuelles Rekonstruktionsbild zum Zeitpunkt t1 umrandet dargestellt. In Fig. 19b ist das zu diesem Zeitpunkt t1 mit der Kamera erfassten Bild gezeigt. Fig. 19c und d zeigen vergrößerte Darstellungen der in Fig. 19a und b gezeigten Bilder.

Optional können die vorstehend genannten Schritte c bis g des Verfahrens an vordefinierbaren spezifischen Positionen im Arbeitsraum und/oder für alle oder ausgewählte zu schneidenden Werkstücke und/oder Teile ausgeführt werden, um der Positionsabhängigkeit der Konturabweichungsbestimmung Rechnung zu tragen und zu berücksichtigen. Befinden sich die Sollbahn und die Referenztextur RT an einer Position im Arbeitsraum des Lasers, die außermittig ist (zum Beispiel an einem Ende des Arbeitstisches, so dass bestimmte Achsen vollständig ausgefahren sind), so treten andere Konturabweichungen auf als wenn die Position zentral und mittig im Arbeitsraum liegt. Deshalb kann es vorgesehen sein, die Applikationsfahrt und die Bilderfassungsfahrt an unterschiedlichen Positionen im Arbeitsraum auszuführen. Dafür können automatisch bestimmten Positionen vorkonfiguriert und auf dem HMI angezeigt werden, die der Anwender dann annehmen oder verwerfen kann.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

Für einen Fachmann ist es insbesondere offensichtlich, dass die Erfindung nicht nur für Laserbearbeitungsmaschinen mit einer koaxialen Kamera angewendet werden kann, sondern auch für solche, die eine andere Kameraanordnung haben, die zur Erfassung der Referenztextur RT während einer Bilderfassungsfahrt geeignet sind. Des Weiteren können die Bauteile der Recheneinheit RE auf mehreren physikalischen Produkten verteilt realisiert oder implementiert sein. So kann beispielsweise das Verfahren vollständig auf der Laserbearbeitungsmaschine ausgeführt werden oder es können ressourcenintensive Berechnungen, wie die Rekonstruktion des Rekonstruktionsbildes v auch auf eine andere Hardwareinstanz ausgelagert werden. So könnte beispielsweise die Rekonstruktion in Schritt e und/oder das Anwenden des Bildverarbeitungsmittels in Schritt f auf einen zentralen Server ausgelagert werden, der die Berechnungen ausführt und dann nur den berechneten Verschiebevektor vv an die Laserbearbeitungsmaschine zurückgibt.

## Patentansprüche

1. Verfahren zum Berechnen von Konturabweichungen (ka) zur Steuerung einer Laserschneidmaschine (L), die beim Schneiden von Werkstücken (W) mit einem Bearbeitungslaserstrahl der Laserschneidmaschine (L) entstehen können, mit folgenden Verfahrensschritten:
a) Einlesen eines Schneidplans (sp), der eine Sollbahn für einen Laserschneidkopf (SK) der Laserschneidmaschine (L) vorgibt;
b) Definieren einer Referenztextur (RT) oder Einlesen einer Referenztextur (RT) aus dem Schneidplan (sp);
c) Ausführen einer Applikationsfahrt des Laserschneidkopfes (SK) zum Applizieren der Referenztextur (RT) zumindest an ausgewählten Positionen entlang der Sollbahn auf dem Werkstück (W);
d) Ausführen einer Bilderfassungsfahrt des Laserschneidkopfes (SK) zum Erfassen von zumindest einem Bild (b), in dem zumindest ein Teil der applizierten Referenztextur (RT) abgebildet ist, mittels einer am Laserschneidkopf (SK) angeordneten optischen Erfassungseinrichtung (K) an zumindest einer der ausgewählten Positionen entlang der Sollbahn;
e) Rekonstruieren zumindest eines virtuellen Rekonstruktionsbildes (v) auf Basis von Steuerwerten (sw), die aus der Sollbahn berechnet werden, und auf Basis der definierten Referenztextur (RT);
f) Anwenden eines Bildverarbeitungsmittels (BV) zum Vergleich des erfassten zumindest einen Bilds (b) und des rekonstruierten virtuellen Rekonstruktionsbildes (v) zur Bestimmung eines Verschiebevektors (vv) zwischen jeweils zugeordneten Bildpunkten;
g) Ausgeben der Konturabweichung (ka), die aus dem bestimmten Verschiebevektor (vv) berechnet wird.

2. Verfahren nach Anspruch 1, beinhaltend:
h) Berechnen und Ausführen von Steueranweisungen (sa) mit Korrekturinstruktionen (kl) zur Kompensation der berechneten Konturabweichungen (ka).

3. Verfahren nach einem der vorangehenden Ansprüche, bei dem die Referenztextur (RT) eine Gravur ist.

4. Verfahren nach einem der vorangehenden Ansprüche, bei dem das Applizieren der Referenztextur (RT) in der Applikationsfahrt mit reduzierten Dynamikwerten ausgeführt wird, die geringer sind als Produktivdynamikwerte und bei dem in der Bilderfassungsfahrt die Referenztextur (RT) entlang der Sollbahn mit Produktivdynamikwerten bei deaktiviertem Laser abgefahren wird und dabei das Erfassen des zumindest eines Bilds (b) in Schritt d) erfolgt.

5. Verfahren nach dem unmittelbar vorangehenden Anspruch, bei dem das Applizieren der Referenztextur in der Applikationsfahrt mit Produktivdynamikwerten erfolgt, die denjenigen entsprechen, die bei einer Produktivbearbeitung angewendet werden und bei dem in der Bilderfassungsfahrt auf der Sollbahn mit einem reduzierten Dynamikwert bei deaktiviertem Laser abgefahren wird und dabei das Erfassen des zumindest eines Bilds in Schritt d) erfolgt.

6. Verfahren nach einem der vorangehenden Ansprüche, bei dem das Abfahren auf oder entlang der Sollbahn mit einem zum Schneiden deaktivierten Bearbeitungslaserstrahl der Laserschneidmaschine (L) ausgeführt wird.

7. Verfahren nach einem der vorangehenden Ansprüche, bei dem der Vergleich in Schritt f) an einer Mittelpunktposition der jeweiligen Bilder (b, v) erfolgt.

8. Verfahren nach einem der vorangehenden Ansprüche, bei dem die Referenztextur (RT) eine auf einem Trägerobjekt applizierte Textur ist, wobei das Trägerobjekt ortsfest an einem Trägerbereich der Laserschneidmaschine (L) für das Werkstück (W) angeordnet und dort positionskalibriert ist.

9. Verfahren nach dem unmittelbar vorangehenden Anspruch, bei dem die Referenztextur (RT) eine von einem ortsfest mit der Laserschneidmaschine (L) verbundenen und positionskalibrierten Projektor auf das Werkstück(W) projizierte Textur ist.

10. Verfahren nach einem der vorangehenden Ansprüche, bei dem die optische Erfassungseinrichtung zumindest eine Kamera (K) umfasst, die im oder am Laserschneidkopf (SK) oder am Antriebssystem (A) des Laserschneidkopfes (SK) angeordnet ist.

11. Verfahren nach einem der vorangehenden Ansprüche, bei dem aus dem zumindest einem erfassten Bild (b) eine Istbahn extrahiert wird.

12. Verfahren nach einem der vorangehenden Ansprüche, bei dem das Verfahren vor oder während einem Produktivschneidvorgang ausgeführt wird.

13. Verfahren nach einem der vorangehenden Ansprüche, bei dem das Erfassen des zumindest einen Bilds (b) unter Aktivierung eines Beleuchtungsmittels (B) erfolgt.

14. Recheneinheit (RE) zur Ausführung des Verfahrens nach einem der vorangehenden Ansprüche, mit:
- Einer Einleseschnittstelle (ES) zum Einlesen eines Schneidplans (sp), der eine Sollbahn für einen Laserschneidkopf (SK) der Laserbearbeitungsmaschine (L) vorgibt;
- Einem Referenztexturdefinitionsmodul (RDM) zum Definieren einer Referenztextur (RT) oder zum Einlesen der Referenztextur (RT) aus dem Schneidplan (sp);
- wobei die Recheneinheit (RE) ausgebildet ist, erste Instruktionen (11) auszugeben, um eine Applikationsfahrt des Laserschneidkopfes (SK) zum Applizieren der Referenztextur (RT) zumindest an ausgewählten Positionen entlang der Sollbahn auf dem Werkstück (W) zu veranlassen;
- wobei die Recheneinheit (RE) weiterhin ausgebildet ist, zweite Instruktionen (I2) auszugeben, um eine Bilderfassungsfahrt des Laserschneidkopfes (SK) zum Erfassen von zumindest einem Bild zu (b) veranlassen, in dem zumindest ein Teil der applizierten Referenztextur (RT) abgebildet ist, mittels einer am Laserschneidkopf (SK) angeordneten optischen Erfassungseinrichtung (K) an zumindest einer der ausgewählten Positionen entlang der Sollbahn;
- einem Rekonstruktor (R), der zur Rekonstruktion zumindest eines virtuellen Rekonstruktionsbildes (v) ausgebildet ist auf Basis von Steuerwerten (sw), die aus der Sollbahn berechnet werden, und auf Basis der definierten Referenztextur (RT);
- einem Bildverarbeitungsmittel (BV), das zum Vergleich des erfassten zumindest einen Bilds (b) und des rekonstruierten virtuellen Rekonstruktionsbildes (v) ausgebildet ist zur Bestimmung eines Verschiebevektors (vv) zwischen jeweils zugeordneten Bildpunkten;
- einer Ausgabeschnittstelle (AS), die zum Ausgeben der Konturabweichung (ka) ausgebildet ist, die aus dem bestimmten Verschiebevektor (vv) berechnet wird.

15. Laserschneidmaschine mit einer Recheneinheit nach dem vorangehenden Anspruch.

16. Laserschneidmaschine nach Anspruch 15, die weiterhin ein Kalibriermodul umfasst, das eingerichtet ist zum Berechnen und Ausführen von Steueranweisungen (sa) mit Korrekturinstruktionen (kl) zur Kompensation der berechneten Konturabweichungen (ka).

17. Computerprogramm, wobei das Computerprogramm in eine Speichereinheit eines Computers und insbesondere in eine Recheneinheit (RE) ladbar ist und Programmcodeabschnitte enthält, um den Computer zu veranlassen, das Verfahren zum Bestimmen von Bahnabweichungen zur Steuerung einer Laserschneidmaschine (L) gemäß einem der vorangehenden Verfahrensansprüche auszuführen, wenn das Computerprogramm in dem Computer ausgeführt wird.
